# NEW EUROPEAN PATENT SPECIFICATION

(11) **EP 0 911 691 B2**
(45) Date of publication and mention of the opposition decision: **13.04.2005**
(45) Mention of the grant of the patent: 09.01.2002
(21) Application number: 98119770.0
(22) Date of filing: 22.10.1998
(51) Int. Cl.: G03C 1/498, C08F 6/00

(54) **Recording elements and making methods**
Aufzeichnungsmaterialien und Herstellungsverfahren
Matériaux d'enregistrement et procédés de fabrication

(30) Priority: 27.10.1997 JP 31145497
(43) Date of publication of application: 28.04.1999
(73) Proprietor: FUJI PHOTO FILM CO., LTD., Kanagawa 250-01 (JP)
(72) Inventor: Ishizaka, Tatsuya, Minami-Ashigara-shi, Kanagawa-ken 258 (JP); Hatakeyama, Akira, Minami-Ashigara-shi, Kanagawa-ken 258 (JP)
(74) Representative: HOFFMANN - EITLE

(56) References cited:
- EP-A- 0 172 541
- EP-A- 0 502 508
- EP-A- 0 512 736
- EP-A1- 0 903 626
- WO-A-96/16355
- WO-A1-94/16361
- WO-A1-97/04355
- US-A- 4 160 726
- US-A- 4 271 055
- US-A- 4 340 702
- Encyclopedia of Polymer Science and Engineering, Volume 8, published by John Wiley & Sons (1987), pages 647-677: Latices
- "Methods of Latex Cleaning" by M.S. El-Aasser in Science & Technology of Polymer Colloids, Volume II, Editors G.W.Poehlein and R.H Ottewill, Nato Advanced Sciences Institute Series E, Martinus Nijhoff, Boston (1983), pp.442-448

## Description

This invention relates to a method for producing image recording elements and more particularly, image recording elements having low fog after image formation and improved image stability after image formation, typically thermographic and photothermographic recording elements.

### BACKGROUND OF THE INVENTION

Photothermographic materials which are processed by a thermographic process to form photographic images are disclosed, for example, in USP 3,152,904 and 3,457,075, D. Morgan and B. Shely, "Thermally Processed Silver Systems" in "Imaging Processes and Materials," Neblette, 8th Ed., Sturge, V. Walworth and A. Shepp Ed., page 2, 1969.

These photothermographic materials generally contain a reducible silver source (e.g., organic silver salt), a catalytic amount of a photocatalyst (e.g., silver halide), and a reducing agent, typically dispersed in a binder matrix. Photothermographic materials are stable at room temperature. When they are heated at an elevated temperature (e. g., 80°C or higher) after exposure, redox reaction takes place between the reducible silver source (functioning as an oxidizing agent) and the reducing agent to form silver. This redox reaction is promoted by the catalysis of a latent image produced by exposure. Silver formed by reaction of the organic silver salt in exposed regions provides visible images in contrast to unexposed regions, forming an image.

Recently in the medical field, the imaging technology has made an advance with a focus on the keyword of easy, rapid and Earth-friendly processing. For example, the development of a medical image recording system which is. laser exposed and heat developed started, and a dry system discharging a processing solution as little as possible has become widespread. Meanwhile, the laser output means has also made a progress to offer a wider range of choice of lasers, and the demand for visible light lasers is increasing.

The photothermographic elements suffer from the problems that photographic properties largely vary with developing temperatures and that development often causes fog. To solve these problems, a variety of antifoggants have been developed. Exemplary known antifoggants include thiosulfonic acid derivatives, sulfinic acid derivatives, mercury compounds, N-halogeno compounds, lithium salts, peroxides, persulfates, rhodium salts, cobalt salts, palladium compounds, cerium compounds, disulfide compounds, polyacids, and polyhalides. These are described in JP-A 10724/1974, 90118/1974, 97613/1974, 101019/1975, 116024/1975, 119624/1975, 120328/1975, 123331/1975, 134421/1975, 22431/1976, 42529/1976, 47419/1976, 51323/1976, 78227/1976, 121332/1976, 58022/1979, 70543/1981, 99335/1981, 90842/1984, 129642/1986, 129845/1987, 208191/1994, 2781/1995, 5621/1995, and 15809/1996, USP 3,589,903, 3,885,968, 5,340,712, 5,369,000, and 5,464,737. Despite such continuing efforts on antifoggants, the fog level achieved thus far is still below the practically acceptable level, and a further antifogging technique is demanded.

When such photographic photosensitive materials are used, all the components necessary for image formation are left over in the image forming material even after image formation because of the lack of fixation and water washing steps. As a consequence, a density rise and discoloration can occur after image formation. There is a desire to have an image recording material having improved image stability.

EP 0 502 508 A relates to a diffusion transfer color photographic material which is characterised by the presence of a non-diffusive donor compound capable of releasing or forming a diffusive dye in correspondence or reverse correspondence with reduction of silver halide to silver, and a non-diffusive filter dye, wherein the filter dye is added in the form of an emulsified dispersion together with the dye donor compound. This document furthermore teaches a heat-developable diffusion transfer color photographic material comprising at least two layers of a light-sensitive layer B having a color sensitivity peak to light in a range of 720 to 780 nm and a light-sensitive layer A having a colour sensitivity peak to light in a range from 790 to 869 nm, on a support, in which the maximum sensitivity of the light sensitive layer B is the same as or lower than the maximum sensitivity of the light-sensitive layer A.

WO 96/16355 relates to photographic elements containing a substrate, an anti-static layer and a silver halide emulsion layer wherein the anti-static layer comprises a vinyl addition polymer and vanadium oxide. The presence of the vinyl addition polymer in the silver halide emulsion layer is not disclosed in this document.

### SUMMARY OF THE INVENTION

Therefore, an object of the invention is to provide a method for producing a recording element comprising a support and at least one image-forming layer on at least one surface of the support, the method comprising the steps of coating a thermographic layer-coating solution containing a non-photosensitive organic silver salt, a reducing agent for the organic silver salt, and a polymer latex or a photothermographic layer-coating solution containing a photosensitive silver halide, a non-photosensitive organic silver salt, a reducing agent, for the organic silver salt, and a polymer latex, and drying the coating to form the image-forming layer.

In all the aspects, the invention is characterized in that the polymer latex is treated with a separation functional polymer in the form of an ion-exchange resin or a separation membrane to reduce the latex's ionic conductivity to 2.5 mS/cm or less when measured at a polymer concentration of 25% by weight at 25 °C.

The separation functional polymer is typically a separation membrane, ultrafiltration membrane or dialysis membrane. Preferably, the polymer latex comprises a polymer having an equilibrium moisture content at 25°C and RH 60% of up to 2% by weight.

Also preferably, the coating solution is an aqueous dispersion comprising an aqueous solvent containing at least 30% by weight of water.

### DETAILED DESCRIPTION OF THE INVENTION

The present invention is directed to methods for producing thermographic or photothermographic recording elements which form images with a minimal fog and are improved in image stability after image formation.

The present invention is characterized by a method which uses a polymer latex which has been treated with a separation functional polymer and/or layer formation using a polymer latex which has been treated with a separation functional polymer. Conventional polymer latexes are prepared by polymer synthesis methods. During the synthesis process, surfactants, polymerization initiators, anti-foaming agents, pH adjusting agents and the like are added, and a polymer latex is eventually synthesized. In the polymer latex, residual monomers, additives such as surfactants, and ions (cations and anions) are kept contained. For the purpose of separating these components which are essentially unnecessary for the image forming element, the invention intends to treat the polymer latex with the separation functional polymer to remove the unnecessary components.

Separation functional polymers are generally available as ion-exchange resins and separation membranes. The ion-exchange resins which can be advantageously used herein include strongly basic or weakly basic anion-exchange resins, strongly acidic or weakly acidic cation-exchange resins, porous ion-exchange resins having a giant network structure, and chelate resins. The separation membranes which can be advantageously used herein include reverse osmosis membranes such as cellulose acetate, cellulose triacetate, polypiperazine amide, all aromatic polyamide, polybenzimidazolone, crosslinked polyether, alkyl allyl polyamide-polyurea, polyacrylonitrile, and sulfone-polysulfone membranes; precision filtration membranes such as cellulose acetate, polypropylene, polyvinyl chloride, polyvinyl alcohol, polyester, polyamide, and polyimide membranes; ultrafiltration membranes such as cellulose, cellulose/regenerated cellulose, polyimide, polysulfone, polyamide, polyvinyl chloride, polypropylene, and polyvinylidene chloride membranes, in flat, tubular, hollow fiber, spiral, and pleat membrane forms; dialysis membranes such as cellulose membranes, acrylonitrile hollow fiber membranes, ethylene/vinyl alcohol copolymer hollow fiber membranes, polymethyl methacrylate hollow fiber membranes, polysulfone hollow fiber membranes, polypropylene hollow fiber membranes, and regenerated cellulose membranes; and ion-exchange membranes for electric dialysis such as inorganic ion-exchange membranes, crosslinked styrene/divinylbenzene polymer sulfonated membranes, crosslinked chloromethylstyrene/divinylbenzene polymer aminated membranes, crosslinked vinyl pyridine/divinylbenzene polymer N-methylated membranes, perfluorocarbon carboxylic acid membranes, and styrene/butadiene membranes. In the practice of the invention, use of separation membranes is preferred. Use of ultrafiltration membranes and dialysis membranes is more preferred. The ultrafiltration membranes and dialysis membranes preferred in the invention usually have a fractional molecular weight of about 5,000 to about 25,000 although the fractional molecular weight is not critical Insofar as the benefits of the invention are achievable.

With respect to these materials, reference should be made to "Functional Polymers -Products and Market-1994 Edition," (Tokyo Techno-Brain K.K.), Chap. 16 and 17. For example, the ion-exchange resins are commercially available under the trade name of Amberite and Duolite from Rohm & Haas and Dowex from Dow Chemical; the ion-exchange membranes under the trade name of Aciplex from Asahi Chemicals K.K., Selemion from Asahi Glass, Neosepta from Tokuyama Soda K.K., and Nafion from E.I. duPont; the precision filtration membranes under the trade name of Micro-Filter from Fuji Photo Film Co., Ltd.; the ultrafiltration membranes under the trade name of Microsa UF Labomodule from Asahi Chemicals K.K., MU from Kurare K.K., and Molsep from Dicell Chemical K.K.; the reverse osmosis membranes under the trade name of PEC-1000 from Toray K.K., NTR7250 from Nitto Denko K.K., B9 and B10 from E.I. duPont; and the dialysis membranes under the trade name of Cellulose Tube manufactured by VISKASE and marketed by Sanko Junyaku K.K..

According to the invention, a polymer latex is treated with a separation functional polymer as by ultrafiltration. Filtration is usually carried out plural times. By treating with the separation functional polymer, the polymer latex is reduced in ionic conductivity. The polymer latex as treated with the separation functional polymer should preferably have an ionic conductivity of 0.05 to 2.5 mS/cm, more preferably 0.1 to 2.0 mS/cm, further preferably 0.15 to 1.0 mS/cm. Since the ionic conductivity depends on the polymer concentration of the polymer latex, the ionic conductivity used throughout the specification is a measurement at a polymer concentration of 25% by weight. Differently stated, a polymer latex is diluted with distilled water or concentrated to a polymer concentration of 25% by weight before measurement is made at 25°C.

The term "polymer latex" used herein is a dispersion of a microparticulate water-insoluble hydrophobic polymer in a water-soluble dispersing medium. With respect to the dispersed state, a polymer emulsified in a dispersing medium, an emulsion polymerized polymer, a micelle dispersion, and a polymer having a hydrophilic structure in a part of its molecule so that the molecular chain itself is dispersed on a molecular basis are included.

With respect to the polymer latex, reference is made to Okuda and Inagaki Ed., "Synthetic Resin Emulsion, " Kobunshi Kankokai, 1978; Sugimura, Kataoka, Suzuki and Kasahara Ed., "Application of Synthetic Latex," Kobunshi Kankokai, 1993; and Muroi, "Chemistry of Synthetic Latex," Kobunshi Kankokai, 1970.

Dispersed particles should preferably have a mean particle size of about 1 to 50,000 nm, more preferably about 5 to 1,000 nm. No particular limit is imposed on the particle size distribution of dispersed particles, and the dispersion may have either a wide particle size distribution or a monodisperse particle size distribution.

The polymer latex which is used in the method of the present invention and which is treated with a separation functional polymer and has an ionic conductivity of up to 2.5 mS/cm may be either a latex of the conventional uniform structure or a latex of the so-called core/shell type. In the latter case, better results are sometimes obtained when the core and the shell have different glass transition temperatures.

The polymer latex which can be used in the method of the present invention should preferably have a minimum film-forming temperature (MFT) of about -30°C to 90°C, more preferably about 0°C to 70°C. A film-forming aid may be added in order to control the minimum film-forming temperature. The film-forming aid is also referred to as a plasticizer and includes organic compounds (typically organic solvents) for lowering the minimum film-forming temperature of a polymer latex. It is described in Muroi, "Chemistry of Synthetic Latex," Kobunshi Kankokai, 1970.

Polymers used in the polymer latex include acrylic resins, vinyl acetate resins, polyester resins, polyurethane resins, rubbery resins, vinyl chloride resins, vinylidene chloride resins, polyolefin resins, and copolymers thereof. The polymer may be linear or branched or crosslinked. The polymer may be either a homopolymer or a copolymer having two or more monomers polymerized together. The copolymer may be either a random copolymer or a block copolymer.

The polymer preferably has a number average molecule weight Mn of about 5,000 to about 1,000,000, more preferably about 10,000 to about 100,000. Polymers with a too lower molecular weight would generally provide a low film strength after coating whereas polymers with a too higher molecular weight are difficult to form films.

The polymer of the polymer latex which can be used in the method of the present invention should preferably have an equilibrium moisture content at 25°C and RH 60% of up to 2% by weight, more preferably up to 1% by weight. With respect to the definition and measurement of equilibrium moisture content, reference should be made to "Polymer Engineering Series No. 14, Polymer Material Test Methods," Edited by Japanese Polymer Society, Chijin Shokan Publishing K.K., for example.

The polymer latex which is treated with a separation functional polymer and has an ionic conductivity of up to 2.5 mS/cm and which is used in preparing the photosensitive layer of the photothermographic element of the invention preferably becomes a binder after a polymer latex coating solution is applied and dried to form a photosensitive layer. Illustrative examples of the inventive polymer latex include latexes of methyl methacrylate/ethyl acrylate/methacrylic acid copolymers, latexes of methyl methacrylate/2-ethylhexyl acrylate/styrene/acrylic acid copolymers, latexes of styrene/butadiene/acryiic acid copolymers, latexes of styrene/butadiene/divinyl benzene/methacrylic acid copolymers, latexes of methyl methacrylate/vinyl chloride/acrylic acid copolymers, and latexes of vinylidene chloride/ethyl acrylate/acrylonitrile/methacrylic acid copolymers.

These polymers or polymer latexes are commercially available. Exemplary acrylic resins are Sebian A-4635, 46583 and 4601 (Daicell Chemical Industry K.K.) and Nipol LX811, 814, 820, 821 and 857 (Nippon Zeon K.K.). Exemplary polyester resins are FINETEX ES650, 611, 675, and 850 (Dai-Nippon Ink & Chemicals K.K.) and WD-size and WMS (Eastman Chemical Products, Inc.). Exemplary polyurethane resins are HYDRAN AP10, 20, 30 and 40 (Dai-Nippon Ink & Chemicals K.K.). Exemplary rubbery resins are LACSTAR 7310K, 3307B, 4700H and 7132C (Dai-Nippon Ink & Chemicals K.K.) and Nipol LX416, 410, 438C and 2507 (Nippon Zeon K.K.). Exemplary vinyl chloride resins are G351 and G576 (Nippon Zeon K.K.). Exemplary vinylidene chloride resins are L502 and L513 (Asahi Chemicals K. K.). Exemplary olefin resins are Chemipearl S120 and SA100 (Mitsui Petro-Chemical K.K.). These polymers may be used alone or in admixture of two or more. Notably, the polymer latex is used at a polymer concentration of 30 to 50% by weight. These polymer latexes are treated with a separation functional polymer or otherwise processed so as to provide an ionic conductivity of up to 2.5 mS/cm before they are used.

In a non-photosensitive organic silver salt-containing layer and/or photosensitive silver halide-containing layer and/or reducing agent-containing layer, the polymer latex described above is preferably used in an amount of at least 50% by weight, especially at least 70% by weight, of the entire binder. In these layers, a hydrophilic polymer may be added in an amount of less than 50% by weight of the entire binder if necessary. Such hydrophilic polymers are gelatin, polyvinyl alcohol, methyl cellulose, hydroxypropyl cellulose, carboxymethyl cellulose, and hydroxypropyl methyl cellulose. The amount of the hydrophilic polymer added is preferably less than 30% by weight of the entire binder in the layer.

### Organic silver salt

The organic silver salt used herein is relatively stable to light, but forms a silver image when heated at 80°C or higher in the presence of an exposed photocatalyst (as typified by a latent image of photosensitive silver halide) and a reducing agent. The organic silver salt may be of any desired organic compound containing a source capable of reducing silver ion. Preferred are silver salts of organic acids, typically long chain aliphatic carboxylic acids having 10 to 30 carbon atoms, especially 15 to 28 carbon atoms. Also preferred are complexes of organic or inorganic silver salts with ligands having a stability constant in the range of 4.0 to 10.0. The silver-providing substance preferably constitutes about 5 to 70% by weight of the image forming layer. Preferred organic silver salts include silver salts of organic compounds having a carboxyl group. Examples include silver salts of aliphatic carboxylic acids and silver salts of aromatic carboxylic acids though not limited thereto. Preferred examples of the silver salt of aliphatic carboxylic acid include silver behenate, silver arachidate, silver stearate, silver oleate, silver laurate, silver caproate, silver myristate, silver palmitate, silver maleate, silver fumarate, silver tartrate, silver linolate, silver butyrate, silver camphorate and mixtures thereof.

Silver salts of compounds having a mercapto or thion group and derivatives thereof are also useful. Preferred examples of these compounds include a silver salt of 3-mercapto-4-phenyl-1,2,4-triazole, a silver salt of 2-mercaptobenzimidazole, a silver salt of 2-mercapto-5-aminothiadiazole, a silversalt of 2-(ethylglycolamido)-benzothiazole, silver salts of thioglycolic acids such as silver salts of S-alkylthioglycolic acids wherein the alkyl group has 12 to 22 carbon atoms, silver salts of dithiocarboxylic acids such as a silver salt of dithioacetic acid, silver salts of thioamides, a silver salt of 5-carboxyl-1-methyl-2-phenyl-4-thiopyridine, silver salts of mercaptotriazines, a silver salt of 2-mercaptobenzoxazole as well as silver salts of 1,2,4-mercaptothiazole derivatives such as a silver salt of 3-amino-5-benzylthio-1,2,4-thiazole as described in USP 4,123,274 and silver salts of thion compounds such as a silver salt of 3-(3-carboxyethyl)-4methyl-4-thiazoline-2-thion as described in USP 3,301,678. Compounds containing an imino group may also be used. Preferred examples of these compounds include silver salts of benzotriazole and derivatives thereof, for example, silver salts of benzotriazoles such as silver methylbenzotriazole, silver salts of halogenated benzotriazoles such as silver 5-chlorobenzotriazole as well as silver salts of 1,2,4-triazole and 1-H-tetrazole and silver salts of imidazole and imidazole derivatives as described in USP 4,220,709. Also useful are various silver acetylide compounds as described, for example, in USP 4,761,361 and 4,775,613.

The organic silver salt which can be used herein may take any desired shape although needle crystals having a minor axis and a major axis are preferred. In the practice of the invention, grains should preferably have a minor axis of 0.01 µm to 0.20 µm and a major axis of 0.10 µm to 5.0 µm, more preferably a minor axis of 0.01 µm to 0.15 µm and a major axis of 0.10 µm to 4.0 µm. The grain size distribution of the organic silver salt is desirably monodisperse. The monodisperse distribution means that a standard deviation of the length of minor and major axes divided by the length, respectively, expressed in percent, is preferably up to 100%, more preferably up to 80%, most preferably up to 50%. It can be determined from the measurement of the shape of organic silver salt grains using an image obtained through a transmission electron microscope. Another method for determining a monodisperse distribution is to determine a standard deviation of a volume weighed mean diameter. The standard deviation divided by the volume weighed mean diameter, expressed in percent, which is a coefficient of variation, is preferably up to 100%, more preferably up to 80%, most preferably up to 50%. It may be determined by irradiating laser light, for example, to organic silver salt grains dispersed in liquid and determining the autocorrelation function of the fluctuation of scattering light relative to a time change, and obtaining the grain size (volume weighed mean diameter) therefrom.

The organic silver salt used herein is preferably desalted. The desalting method is not critical. Any well-known method may be used although well-known filtration methods such as centrifugation, suction filtration, ultrafiltration, and flocculation/water washing are preferred.

In the practice of the invention, the organic silver salt is prepared into a solid particle dispersion using a dispersant, in order to provide fine particles of small size and free of flocculation. A solid particle dispersion of the organic silver salt may be prepared by mechanically dispersing the salt in the presence of dispersing aids by well-known comminuting means such as ball mills, vibrating ball mills, planetary ball mills, sand mills, colloidal mills, jet mills, and roller mills.

The dispersant used in the preparation of a solid microparticulate dispersion of the organic silver salt may be selected from synthetic anionic polymers such as polyacrylic acid, copolymers of acrylic acid, copolymers of maleic acid, copolymers of maleic acid monoester, and copolymers of acryloylmethylpropanesulfonic acid; semisynthetic anionic polymers such as carboxymethyl starch and carboxymethyl cellulose; anionic polymers such as alginic acid and pectic acid; anionic surfactants as described in JP-A 92716/1977 and WO 88/04794; the compounds described in Japanese Patent Application No. 350753/1995; well-known anionic, nonionic and cationic surfactants; and well-known polymers such as polyvinyl alcohol, polyvinyl pyrrolidone, carboxymethyl cellulose, hydroxypropyl cellulose, and hydroxypropyl methyl cellulose, as well as naturally occurring high molecular weight compounds such as gelatin.

In general, the dispersant is mixed with the organic silver salt in powder or wet cake form prior to dispersion. The resulting slurry is fed into a dispersing machine. Alternatively, a mixture of the dispersant with the organic silver salt is subject to heat treatment or solvent treatment to form a dispersant-bearing powder or wet cake of the organic silver salt. It is acceptable to effect pH control with a suitable pH adjusting agent before, during or after dispersion.

Rather than mechanical dispersion, fine particles can be formed by roughly dispersing the organic silver salt in a solvent through pH control and thereafter, changing the pH in the presence of dispersing aids. An organic solvent can be used as the solvent for rough dispersion although the organic solvent is usually removed at the end of formation of fine particles.

The thus prepared dispersion may be stored while continuously stirring for the purpose of preventing fine particles from settling during storage. Alternatively, the dispersion is stored after adding hydrophilic colloid to establish a highly viscous state (for example, in a jelly-like state using gelatin). An antiseptic agent may be added to the dispersion in order to prevent the growth of bacteria during storage.

The organic silver salt is used in any desired amount, preferably about 0.1 to 5 g/m², more preferably about 1 to 3 g/m², as expressed by a silver coverage per square meter of the element.

### Silver halide

In one preferred embodiment of the invention, a photosensitive silver halide is used to construct a photothermographic element.

A method for forming the photosensitive silver halide according to the invention is well known in the art. Any of the methods disclosed in *Research Disclosure* No. 17029 (June 1978) and USP 3,700,458, for example, may be used. Illustrative methods which can be used herein are a method of adding a halogen-containing compound to a preformed organic silver salt to convert a part of silver of the organic silver salt into photosensitive silver halide and a method of adding a silver-providing compound and a halogen-providing compound to a solution of gelatin or another polymer to form photosensitive silver halide grains and mixing the grains with an organic silver salt. The latter method is preferred in the practice of the invention.

The photosensitive silver halide should preferably have a smaller grain size for the purpose of minimizing white turbidity after image formation. Specifically, the grain size is up to 0.20 µm, preferably 0.01 m to 0.15 µm, most preferably 0.02 µm to 0.12 µm. The term grain size designates the length of an edge of a silver halide grain where silver halide grains are regular grains of cubic or octahedral shape. Where silver halide grains are tabular, the grain size is the diameter of an equivalent circle having the same area as the projected area of a major surface of a tabular grain. Where silver halide grains are not regular, for example, in the case of spherical or rod-shaped grains, the grain size is the diameter of an equivalent sphere having the same volume as a grain.

The shape of silver halide grains may be cubic, octahedral, tabular, spherical, rod-like and potato-like, with cubic and tabular grains being preferred in the practice of the invention. Where tabular silver halide grains are used, they should preferably have an average aspect ratio of from 100:1 to 2:1, more preferably from 50:1 to 3:1. Silver halide grains having rounded corners are also preferably used. No particular limit is imposed on the face indices (Miller indices) of an outer surface of silver halide grains. Preferably silver halide grains have a high proportion of {100} face featuring high spectral sensitization efficiency upon adsorption of a spectral sensitizing dye. The proportion of {100} face is preferably at least 50%, more preferably at least 65%, most preferably at least 80%. Note that the proportion of Miller index {100} face can be determined by the method described in T. Tani, J. Imaging Sci., 29, 165 (1985), utilizing the adsorption dependency of {111} face and {100} face upon adsorption of a sensitizing dye.

The halogen composition of photosensitive silver halide is not critical and may be any of silver chloride, silver chlorobromide, silver bromide, silver iodobromide, silver iodochlorobromide, and silver iodide. Silver bromide or silver iodobromide is preferred in the practice of the invention. Most preferred is silver iodobromide preferably having a silver iodide content of 0.1 to 40 mol%, especially 0.1 to 20 mol%. The halogen composition in grains may have a uniform distribution or a non-uniform distribution wherein the halogen concentration changes in a stepped or continuous manner. Preferred are silver iodobromide grains having a higher silver iodide content in the interior. Silver halide grains of the core/shell structure are also useful. Such core/shell grains preferably have a multilayer structure of 2 to 5 layers, more preferably 2 to 4 layers.

Preferably the photosensitive silver halide grains used herein contain at least one complex of a metal selected from the group consisting of rhodium, rhenium, ruthenium, osmium, iridium, cobalt, mercury, and iron. The metal complexes may be used alone or in admixture of two or more complexes of a common metal or different metals. An appropriate content of the metal complex is 1x10⁻⁹ to 1x10⁻² mol, more preferably 1x10⁻⁸ to 1x10⁻⁴ mol per mol of silver. Illustrative metal complex structures are those described in JP-A 225449/1995. Preferred among cobalt and iron complexes are hexacyano metal complexes. Illustrative, non-limiting examples of cobalt and iron complexes include hexacyano metal complexes such as complexes of ferrocyanate, ferricyanate, and hexacyanocobaltate ions. The distribution of the metal complex in silver halide grains is not critical. That is, the metal complex may be contained in silver halide grains uniformly or at a high concentration in either the core or the shell.

Photosensitive silver halide grains may be desalted by any of well-known water washing methods such as noodle and flocculation methods although silver halide grains may be either desalted or not according to the invention.

The photosensitive silver halide grains used herein should preferably be chemically sensitized. Preferred chemical sensitization methods are sulfur, selenium, and tellurium sensitization methods which are well known in the art. Also useful are a noble metal sensitization method using compounds of gold, platinum, palladium, and iridium and a reduction sensitization method. In the sulfur, selenium, and tellurium sensitization methods, any of compounds well known for the purpose may be used. For example, the compounds described in JP-A 128768/1995 are useful. Exemplary tellurium sensitizing agents include diacyltellurides, bis(oxycarbonyl)tellurides, bis(carbamoyl) tellurides, bis(oxycarbonyl)ditellurides, bis(carbamoyl)ditellurides, compounds having a P=Te bond, tellurocarboxylic salts, Te-organyltellurocarboxylic esters, di(poly)tellurides, tellurides, telluroles, telluroacetals, tellurosulfonates, compounds having a P-Te bond, Te-containing heterocyclics, tellurocarbonyl compounds, inorganic tellurium compounds, and colloidal tellurium. The preferred compounds used in the noble metal sensitization method include chloroauric acid, potassium chloroaurate, potassium aurithiocyanate, gold sulfide, and gold selenide as well as the compounds described in USP 2,448,060 and BP 618,061. Illustrative examples of the compound used in the reduction sensitization method include ascorbic acid, thiourea dioxide, stannous chloride, aminoiminomethane-sulfinic acid, hydrazine derivatives, borane compounds, silane compounds, and polyamine compounds. Reduction sensitization may also be accomplished by ripening the emulsion while maintaining it at pH 7 or higher or at pAg 8.3 or lower. Reduction sensitization may also be accomplished by introducing a single addition portion of silver ion during grain formation.

According to the invention, the photosensitive silver halide is preferably used in an amount of 0.01 to 0.5 mol, more preferably 0.02 to 0.3 mol, most preferably 0.03 to 0.25 mol per mol of the organic silver salt. With respect to a method and conditions of admixing the separately prepared photosensitive silver halide and organic silver salt, there may be used a method of admixing the separately prepared photosensitive silver halide and organic silver salt in a high speed agitator, ball mill, sand mill, colloidal mill, vibrating mill or homogenizer or a method of preparing an organic silver salt by adding the already prepared photosensitive silver halide at any timing during preparation of an organic silver salt. Any desired mixing method may be used insofar as the benefits of the invention are fully achievable.

One of the preferred methods for preparing the silver halide according to the invention is a so-called halidation method of partially halogenating the silver of an organic silver salt with an organic or inorganic halide. Any of organic halides which can react with organic silver salts to form silver halides may be used. Exemplary organic halides are N-halogenoimides (e.g., N-bromosuccinimide), halogenated quaternary nitrogen compounds (e.g., tetrabutylammonium bromide), and aggregates of a halogenated quaternary nitrogen salt and a molecular halogen (e.g., pyridinium bromide perbromide). Any of inorganic halides which can react with organic silver salts to form silver halides may be used. Exemplary inorganic halides are alkali metal and ammonium halides (e.g., sodium chloride, lithium bromide, potassium iodide, and ammonium bromide), alkaline earth metal halides (e.g., calcium bromide and magnesium chloride), transition metal halides (e.g., ferric chloride and cupric bromide), metal complexes having a halogen ligand (e.g., sodium iridate bromide and ammonium rhodate chloride), and molecular halogens (e.g., bromine, chlorine and iodine). A mixture of organic and inorganic halides may also be used.

The amount of the halide added for the halidation purpose is preferably 1 mmol to 500 mmol, especially 10 mmol to 250 mmol of halogen atom per mol of the organic silver salt.

### Reducing agent

The thermographic recording element which can be prepared according to the method of the invention contains a reducing agent for the organic silver salt. The reducing agent for the organic silver salt may be any of substances, preferably organic substances, that reduce silver ion into metallic silver. Conventional photographic developing agents such as Phenidone®, hydroquinone and catechol are useful although hindered phenols are preferred reducing agents. The reducing agent should preferably be contained in an amount of 5 to 50 mol%, more preferably 10 to 40 mol% per mol of silver on the image forming layer-bearing side. The reducing agent may be added to any layer on the image forming layer-bearing side. Where the reducing agent is added to a layer other than the image forming layer, the reducing agent should preferably be contained in a slightly greater amount of about 10 to 50 mol% per mol of silver. The reducing agent may take the form of a precursor which is modified so as to exert its effective function only at the time of development.

For thermographic recording elements using organic silver salts, a wide range of reducing agents are disclosed, for example, in JP-A 6074/1971, 1238/1972, 33621/1972, 46427/1974, 115540/1974, 14334/1975, 36110/1975, 147711/1975, 32632/1976, 1023721/1976, 32324/1976, 51933/1976, 84727/1977, 108654/1980, 146133/1981, 82828/1982, 82829/1982, 3793/1994, USP 3,667,958, 3,679,426, 3,751,252, 3,751,255, 3,761,270, 3,782,949, 3,839,048, 3,928,686, 5,464,738, German Patent No. 2321328, and EP 692732. Exemplary reducing agents include amidoximes such as phenylamidoxime, 2-thienylamidoxime, and p-phenoxyphenylamidoxime; azines such as 4-hydroxy-3,5-dimethoxybenzaldehydeazine; combinations of aliphatic carboxylic acid arylhydrazides with ascorbic acid such as a combination of 2,2-bis(hydroxymethyl)propionyl-β-phenylhydrazine with ascorbic acid; combinations of polyhydroxybenzenes with hydroxylamine, reductone and/or hydrazine, such as combinations of hydroquinone with bis (ethoxyethyl)hydroxylamine, piperidinohexosereductone or formyl-4-methylphenylhydrazine; hydroxamic acids such as phenylhydroxamic acid, p-hydroxyphenylhydroxamic acid, and β-anilinehydroxamic acid; combinations of azines with sulfonamidophenols such as a combination of phenothiazine with 2,6-dichloro-4-benzenesulfonamidephenol; α-cyanophenyl acetic acid derivatives such as ethyl-α-cyano-2-methylphenyl acetate and ethyl-α-cyanophenyl acetate; bis-β-naphthols such as 2,2-dihydroxy-1,1-binaphthyl, 6,6-dibromo-2,2-dihydroxy-1,1-binaphthyl, and bis(2-hydroxy-1-naphthyl)methane; combinations of bis-β-naphthols with 1,3-dihydroxybenzene derivatives such as 2,4-dihydroxybenzophenone and 2,4-dihydroxyacetophenone; 5-pyrazolones such as 3-methyl-1-phenyl-5-pyrazolone; reductones such as dimethylaminohexosereductone, anhydrodihydroaminohexosereductone and anhydrodihydropiperidonehexosereductone; sulfonamidephenol reducing agents such as 2,6-dichloro-4-benzenesulfonamidephenol and p-benzenesulfonamidephenol; 2-phenylindane-1,3-dione, etc.; chromans such as 2,2-dimethyl-7-t-butyl-6-hydroxychroman; 1,4-dihydropyridines such as 2,6-dimethoxy-3,5-dicarboethoxy-1,4-dihydropyridine; bisphenols such as bis(2-hydroxy-3-t-butyl-5-methylphenyl)methane, 2,2-bis(4-hydroxy-3-methylphenyl)propane, 4,4-ethylidene-bis(2-t-butyl-6-methylphenol), 1,1-bis(2-hydroxy-3,5-dimethylphenyl)-3,5,5-trimethylhexane, and 2,2-bis (3,5-dimethyl-4-hydroxyphenyl)-propane; ascorbic acid derivatives such as 1-ascorbyl palmitate and ascorbyl stearate; aldehydes and ketones such as benzil and diacetyl; 3-pyrazolidones and certain indane-1,3-diones; and chromanols (tocopherols). Preferred reducing agents are bisphenols and chromanols.

The reducing agent may be added in any desired form such as solution, powder or solid particle dispersion. The solid particle dispersion of the reducing agent may be prepared by well-known comminuting means such as ball mills, vibrating ball mills, sand mills, colloidal mills, jet mills, and roller mills. Dispersing aids may be used for facilitating dispersion.

### Toner

A higher optical density is sometimes achieved when an additive known as a "toner" for improving images is contained. The toner is also sometimes advantageous in forming black silver images. The toner is preferably used in an amount of 0.1 to 50 mol%, especially 0.5 to 20 mol% per mol of silver on the image forming layer-bearing side. The toner may take the form of a precursor which is modified so as to exert its effective function only at the time of development.

For thermographic recording elements using organic silver salts, a wide range of toners are disclosed, for example, in JP-A 6077/1971, 10282/1972, 5019/1974, 5020/1974, 91215/1974, 2524/1975, 32927/1975, 67132/1975, 67641/1975, 114217/1975, 3223/1976, 27923/1976, 14788/1977, 99813/1977, 1020/1978, 76020/1978, 156524/1979, 156525/1979, 183642/1986, and 56848/1992, JP-B 10727/1974 and 20333/1979, USP 3,080,254, 3,446,648, 3,782,941, 4,123,282, 4,510,236, BP 1,380,795, and Belgian Patent No. 841,910. Examples of the toner include phthalimide and N-hydroxyphthalimide; cyclic imides such as succinimide, pyrazolin-5-one, quinazolinone, 3-phenyl-2-pyrazolin-5-one, 1-phenylurazol, quinazoline and 2,4-thiazolizinedione; naphthalimides such as N-hydroxy-1,8-naphthalimide; cobalt complexes such as cobaltic hexamine trifluoroacetate; mercaptans as exemplified by 3-mercapto-1,2,4-triazole, 2,4-dimercaptopyrimidine, 3-mercapto-4,5-diphenyl-1,2,4-triazole, and 2,5-.dimercapto-1,3,4-thiadiazole; N-(aminomethyl)aryldicarboxyimides such as (N,N-dimethylaminomethyl)phthalimide and N,N-(dimethylaminomethyl)-naphthalene-2,3-dicarboxyimide; blocked pyrazoles, isothiuronium derivatives and certain photo-bleach agents such as N,N'-hexamethylenebis(1-carbamoyl-3,5-dimethylpyrazole), 1,8-(3,6-diazaoctane)-bis(isothiuroniumtrifluoroacetate) and 2-tribromomethylsulfonyl-benzothiazole; 3-ethyl-5-{(3-ethyl-2-benzothiazolinylidene)-1-methylethylidene}-2-thio-2,4-oxazolidinedione; phthalazinone, phthalazinone derivatives or metal salts, or derivatives such as 4-(1-naphthyl)-phthalazinone, 6-chlorophthalazinone, 5,7-dimethoxyphthalazinone and 2,3-dihydro-1,4-phthalazinedione; combinations of phthalazinones with phthalic acid derivatives (e.g., phthalic acid, 4-methylphthalic acid, 4-nitrophthalic acid and tetrachlorophthalic anhydride); phthalazine, phthalazine derivatives or metal salts such as 4-(1-naphthyl)phthalazine, 6-chlorophthalazine, 5,7-dimethoxyphthalazine and 2,3-dihydrophthalazine; combinations of phthalazine with phthalic acid derivatives (e.g., phthalic acid, 4-methylphthalic acid, 4-nitrophthalic acid and tetrachlorophthalic anhydride); quinazolinedione, benzoxazine or naphthoxazine derivatives; rhodium complexes which function not only as a tone regulating agent, but also as a source of halide ion for generating silver halide in situ, for example, ammonium hexachlororhodinate (III), rhodium bromide, rhodium nitrate and potassium hexachlororhodinate (III); inorganic peroxides and persulfates such as ammonium peroxide disulfide and hydrogen peroxide; benzoxazine-2, 4-diones such as 1,3-benzoxazine-2, 4-dione, 8-methyl-1,3-benzoxazine-2,4-dione, and 6-nitro-1,3-benzoxazine-2,4-dione; pyrimidine and asym-triazines such as 2,4-dihydroxypyrimidine and 2-hydroxy-4-aminopyrimidine; azauracil and tetraazapentalene derivatives such as 3,6-dimercapto-1,4-diphenyl-1H,4H-2,3a,5,6a-tetraazapentalene, and 1,4-di(o-chlorophenyl)-3,6-dimercapto-1H,4H-2,3a,5,6a-tetraazapentalene.

The toner may be added in any desired form, for example, as a solution, powder and solid particle dispersion. The solid particle dispersion of the toner is prepared by well-known finely dividing means such as ball mills, vibrating ball mills, sand mills, colloid mills, jet mills, and roller mills. Dispersing aids may be used in preparing the solid particle dispersion.

A layer, preferably a photosensitive layer is formed by applying an aqueous coating solution of necessary components followed by drying. By the term "aqueous", it is meant that water accounts for at least 30% by weight of the solvent or dispersing medium of the coating solution. More preferably at least 50% by weight, most preferably 70 to 100% by weight of the solvent in the coating solution is water. The component other than water of the coating solution may be a water-miscible organic solvent such as methyl alcohol, ethyl alcohol, isopropyl alcohol, methyl cellosolve, ethyl cellosolve, dimethylformamide or ethyl acetate. Exemplary solvent compositions include a 90/10 mixture of water/methanol, a 70/30 mixture of water/methanol, a 90/10 mixture of water/ethanol, a 90/10 mixture of water/isopropanol, a 95/5 mixture of water/dimethylformamide, a 80/15/5 mixture of water/methanol/dimethylformamide, and a 90/5/5 mixture of water/methanol/dimethylformamide, all expressed in a weight ratio.

In the photosensitive layer, the total amount of binder is preferably 0.2 to 30 g/m², more preferably 1 to 15 g/m².

To the photosensitive layer which can be prepared according to the method of the invention, a reducing agent, organic silver salt, toner, antifoggant, and other addenda are added if desired. Additionally, dyestuffs for adjusting tone, crosslinking agents for crosslinking, surfactants for ease of application, and other addenda may be added to the photosensitive layer.

### Sensitizing dye

A sensitizing dye may be used in the practice of the invention. There may be used any of sensitizing dyes which can spectrally sensitize silver halide grains in a desired wavelength region when adsorbed to the silver halide grains. The sensitizing dyes used herein include cyanine dyes, merocyanine dyes, complex cyanine dyes, complex merocyanine dyes, holopolarcyanine dyes, styryl dyes, hemicyanine dyes, oxonol dyes, and hemioxonol dyes. Useful sensitizing dyes which can be used herein are described in *Research Disclosure*, Item 17643 IV-A (December 1978, page 23), *ibid*., Item 1831 X (August 1979, page 437) and the references cited therein. It is advantageous to select a sensitizing dye having appropriate spectral sensitivity to the spectral properties of a particular light source of various laser imagers, scanners, image setters and process cameras.

Exemplary dyes for spectral sensitization to red light include compounds I-1 to I-38 described in JP-A 18726/1979, compounds I-1 to I-35 described in JP-A 75322/1994, compounds I-1 to I-34 described in JP-A 287338/1995, dyes 1 to 20 described in. JP-B 39818/1980, compounds I-1 to I-37 described in JP-A 284343/1987, and compounds I-1 to I-34 described in JP-A 287338/1995 for red light sources such as He-Ne lasers, red semiconductor lasers and LED.

For semiconductor laser light sources in the wavelength range of 750 to 1,400 nm, spectral sensitization may be advantageously done with various known dyes including cyanine, merocyanine, styryl, hemicyanine, oxonol, hemioxonol, and xanthene dyes. Useful cyanine dyes are cyanine dyes having a basic nucleus such as a thiazoline, oxazoline, pyrroline, pyridine, oxazole, thiazole, selenazole and imidazole nucleus. Preferred examples of the useful merocyanine dye contain an acidic nucleus such as a thiohydantoin, rhodanine, oxazolidinedione, thiazolinedione, barbituric acid, thiazolinone, malononitrile, and pyrazolone nucleus in addition to the above-mentioned basic nucleus. Among the above-mentioned cyanine and merocyanine dyes, those having an imino or carboxyl group are especially effective. A suitable choice may be made of well-known dyes as described, for example, in USP 3,761,279, 3,719,495, and 3,877,943, BP 1,466,201, 1,469,117, and 1,422,057, JP-B 10391/1991 and 52387/1994, JP-A 341432/1993, 194781/1994, and 301141/1994.

Especially preferred dye structures are cyanine dyes having a thioether bond-containing substituent group, examples of which are the cyanine dyes described in JP-A 58239/1987, 138638/1991, 138642/1991, 255840/1992, 72659/1993, 72661/1993, 222491/1994, 230506/1990, 258757/1994, 317868/1994, and 324425/1994, Publication of International Patent Application No. 500926/1995, and USP 5,541,054; dyes having a carboxylic group, examples of which are the dyes described in JP-A 163440/1991, 301141/1994 and USP 5,441,899; and merocyanine dyes, polynuclear merocyanine dyes, and polynuclear cyanine dyes, examples'of which are the dyes described in JP-A 6329/1972, 105524/1974, 127719/1976, 80829/1977, 61517/1979, 214846/1984, 6750/1985, 159841/1988, 35109/1994, 59381/1994, 146537/1995, Publication of International Patent Application No. 50111/1993, BP 1,467,638, and USP 5,281,515.

Also useful in the practice of the invention are dyes capable of forming the J-band as disclosed in USP 5,510,236, 3,871,887 (Example 5), JP-A 96131/1990 and 48753/1984.

These sensitizing dyes may be used alone or in admixture of two or more. A combination of sensitizing dyes is often used for the purpose of supersensitization. In addition to the sensitizing dye, the emulsion may contain a dye which itself has no spectral sensitization function or a compound which does not substantially absorb visible light, but is capable of supersensitization. Useful sensitizing dyes, combinations of dyes showing supersensitization, and compounds showing supersensitization are described in Research Disclosure, Vol. 176, 17643 (December 1978), page 23, IV J and JP-B 25500/1974 and 4933/1968, JP-A 19032/1984 and 192242/1984.

The sensitizing dye may be added to a silver halide emulsion by directly dispersing the dye in the emulsion or by dissolving the dye in a solvent and adding the solution to the emulsion. The solvent used herein includes water, methanol, ethanol, propanol, acetone, methyl cellosolve, 2,2,3,3-tetrafluoropropanol, 2,2,2-trifluoroethanol, 3-methoxy-1-propanol, 3-methoxy-1-butanol, 1-methoxy-2-propanol, N,N-dimethylformamide and mixtures thereof.

Also useful are a method of dissolving a dye in a volatile organic solvent, dispersing the solution in water or hydrophilic colloid and adding the dispersion to an emulsion as disclosed in USP 3,469,987, a method of dissolving a dye in an acid and adding the solution to an emulsion or forming an aqueous solution of a dye with the aid of an acid or base and adding it to an emulsion as disclosed in JP-B 23389/1969, 27555/1969 and 22091/1982, a method of forming an aqueous solution or colloidal dispersion of a dye with the aid of a surfactant and adding it to an emulsion as disclosed in USP 3,822,135 and 4,006,025, a method of directly dispersing a dye in hydrophilic colloid and adding the dispersion to an emulsion as disclosed in JP-A 102733/1978 and 105141/1983, and a method of dissolving a dye using a compound capable of red shift and adding the solution to an emulsion as disclosed in JP-A 74624/1976. It is also acceptable to apply ultrasonic waves to form a solution.

The time when the sensitizing dye is added to the silver halide emulsion to be prepared according to the method of the invention is at any step of an emulsion preparing process which has been ascertained effective. The sensitizing dye may be added to the emulsion at any stage or step before the emulsion is coated, for example, at a stage prior to the silver halide grain forming step and/or desalting step, during the desalting step and/or a stage from desalting to the start of chemical ripening as disclosed in USP 2,735,766, 3,628,960, 4,183,756, and 4,225,666, JP-A 184142/1983 and 196749/1985, and a stage immediately before or during chemical ripening and a stage from chemical ripening to emulsion coating as disclosed in JP-A 113920/1983. Also as disclosed in USP 4,225,666 and JP-A 7629/1983, an identical compound may be added alone or in combination with a compound of different structure in divided portions, for example, in divided portions during a grain forming step and during a chemical ripening step or after the completion of chemical ripening, or before or during chemical ripening and after the completion thereof. The type of compound or the combination of compounds to be added in divided portions may be changed.

The amount of the sensitizing dye used may be an appropriate amount complying with sensitivity and fog although the preferred amount is about 10⁻⁶ to 1 mol, more preferably 10⁻⁴ to 10⁻¹ mol per mol of the silver halide in the image forming layer.

### Antifoggant

Antifoggants, stabilizers and stabilizer precursors may be added to the silver halide emulsion and/or organic silver salt to be used in the method according to the invention. Suitable antifoggants stabilizers and stabilizer precursors which can be used alone or in combination include thiazonium salts as described in USP 2,131,038 and 2,694,716, azaindenes as described in USP 2,886,437 and 2,444,605, mercury salts as described in USP 2,728,663, urazoles as described in USP 3,287,135, sulfocatechols as described in USP 3,235,652, oximes, nitrons and nitroindazoles as described in BP 623,448, polyvalent metal salts as described in USP 2,839,405, thiuronium salts as described in USP 3,220,839, palladium, platinum and gold salts as described in USP 2,566,263 and 2,597,915, triazines as described in USP 4,128,557, 4,137,079, 4,138,365 and 4,459,350, and phosphorus compounds as described in USP 4,411,985.

Preferred antifoggants are organic halides, for example, the compounds described in JP-A 119624/1975, 120328/1975, 121332/1976, 58022/1979, 70543/1981, 99335/1981, 90842/1984, 129642/1986, 129845/1987, 208191/1994, 5621/1995, 2781/1995, 15809/1996, USP 5,340,712, 5,369,000, and 5,464,737.

The antifoggant may be added in any desired form such as solution, powder or solid particle dispersion. The solid particle dispersion of the antifoggant may be prepared by well-known comminuting means such as ball mills, vibrating ball mills, sand mills, colloidal mills, jet mills, and roller mills. Dispersing aids may be used for facilitating dispersion.

It is sometimes advantageous to add a mercury (II) salt to an emulsion layer as an antifoggant though not necessary in the practice of the invention. Mercury (II) salts preferred to this end are mercury acetate and mercury bromide. The mercury (II) salt is preferably added in an amount of 1x10⁻⁹ mol to 1x10⁻³ mol, more preferably 1x10⁻⁸ mol to 1x10⁻⁴ mol per mol of silver coated.

Still further, the thermographic recording element which is prepared according to the method of the invention may contain a benzoic acid type compound for the purposes of increasing sensitivity and restraining fog. Any of benzoic acid type compounds may be used although examples of the preferred structure are described in USP 4,784,939 and 4,152,160, Japanese Patent Application Nos. 98051/1996, 151241/1996, and 151242/1996. The benzoic acid type compound may be added to any site in the recording element, preferably to a layer on the same side as the photosensitive layer, and more preferably an organic silver salt-containing layer. The benzoic acid type compound may be added at any step in the preparation of a coating solution. Where it is contained in an organic silver salt-containing layer, it may be added at any step from the preparation of the organic silver salt to the preparation of a coating solution, preferably after the preparation of the organic silver salt and immediately before coating. The benzoic acid type compound may be added in any desired form including powder, solution and fine particle dispersion. Alternatively, it may be added in a solution form after mixing it with other additives such as a sensitizing dye, reducing agent and toner. The benzoic acid type compound may be added in any desired amount, preferably 1 x 10⁻⁶ mol to 2 mol, more preferably 1 x 10⁻³ mol to 0.5 mol per mol of silver.

In the recording element which is prepared according to the method of the invention, mercapto, disulfide and thion compounds may be added for the purposes of retarding or accelerating development to control development, improving spectral sensitization efficiency, and improving storage stability before and after development.

Where mercapto compounds are used herein, any structure is acceptable. Preferred are structures represented by Ar-S-M and Ar-S-S-Ar wherein M is a hydrogen atom or alkali metal atom, and Ar is an aromatic ring or fused aromatic ring having at least one nitrogen, sulfur, oxygen, selenium or tellurium atom. Preferred hetero-aromatic rings are benzimidazole, naphthimidazole, benzothiazole, naphthothiazole, benzoxazole, naphthoxazole, benzoselenazole, benzotellurazole, imidazole, oxazole, pyrazole, triazole, thiadiazole, tetrazole, triazine, pyrimidine, pyridazine, pyrazine, pyridine, purine, quinoline and quinazolinone rings. These hetero-aromatic rings may have a substituent selected from the group consisting of halogen (e.g., Br and Cl), hydroxy, amino, carboxy, alkyl groups (having at least 1 carbon atom, preferably 1 to 4 carbon atoms), and alkoxy groups (having at least 1 carbon atom, preferably 1 to 4 carbon atoms). Illustrative, non-limiting examples of the mercapto-substituted hetero-aromatic compound include 2-mercaptobenzimidazole, 2-mercaptobenzoxazole, 2-mercaptobenzothiazole, 2-mercapto-5-methylbenzimidazole, 6-ethoxy-2-mercaptobenzothiazole, 2,2'-dithiobis(benzothiazole), 3-mercapto-1,2,4-triazole, 4,5-diphenyl-2-imidazolethiol, 2-mercaptoimidazole, 1-ethyl-2-mercaptobenzimidazole, 2-mercaptoquinoline, 8-mercaptopurine, 2-mercapto-4(3H)-quinazolinone, 7-trifluoromethyl-4-quinolinethiol, 2,3,5,6-tetrachloro-4-pyridinethiol, 4-amino-6-hydroxy-2-mercaptopyrimidine monohydrate, 2-amino-5-mercapto-1,3,4-thiadiazole, 3-amino-5-mercapto-1,2,4-triazole, 4-hydroxy-2-mercaptopyrimidine, 2-mercaptopyrimidine, 4,6-diamino-2-mercaptopyrimidine, 2-mercapto-4-methylpyrimidine hydrochloride, 3-mercapto-5-phenyl-1,2,4-triazole, and 2-mercapto-4-phenyloxazole.

These mercapto compounds are preferably added to the emulsion layer in amounts of 0.001 to 1.0 mol, more preferably 0.01 to 0.3 mol per mol of silver.

In the recording element which is prepared according to the method of the invention, a compound of the following general formula (1) or (2) may be used for minimizing changes of photographic properties under varying heat development conditions. 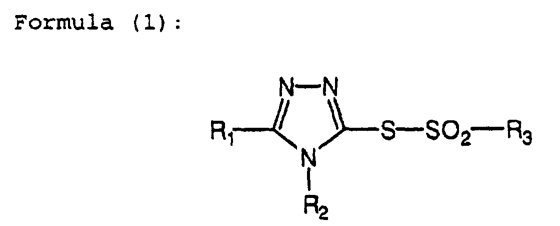 Herein R₁, R₂, and R₃ are independently hydrogen, aliphatic hydrocarbon groups or aryl groups.

The aliphatic hydrocarbon groups represented by R₁ in formula (1) include normal, branched or cyclic alkyl groups (preferably of 1 to 20 carbon atoms, more preferably 3 to 16 carbon atoms, most preferably 5 to 12 carbon atoms), alkenyl groups (preferably of 2 to 20 carbon atoms, more preferably 2 to 16 carbon atoms, most preferably 2 to 12 carbon atoms), and alkynyl groups (preferably of 2 to 20 carbon atoms, more preferably 2 to 16 carbon atoms, most preferably 2 to 12 carbon atoms), which may have substituents.

Examples of the substituents include aryl groups (preferably of 6 to 30 carbon atoms, more preferably 6 to 20 carbon atoms, most preferably 6 to 12 carbon atoms, such as phenyl, p-methylphenyl, and naphthyl), amino groups (preferably of 0 to 20 carbon atoms, more preferably 0 to 10 carbon atoms, most preferably 0 to 6 carbon atoms, such as amino, methylamino, dimethylamino, diethylamino, and dibenzylamino), alkoxy groups (preferably of 1 to 20 carbon atoms, more preferably 1 to 12 carbon atoms, most preferably 1 to 8 carbon atoms, such as methoxy, ethoxy, butoxy, and dodecyloxy), aryloxy groups (preferably of 6 to 20 carbon atoms, more preferably 6 to 16 carbon atoms, most preferably 6 to 12 carbon atoms, such as phenyloxy and 2-naphthyloxy), acyl groups (preferably of 1 to 20 carbon atoms, more preferably 1 to 16 carbon atoms, most preferably 1 to 12 carbon atoms, such as acetyl, benzoyl, formyl, and pivaloyl), alkoxycarbonyl groups (preferably of 2 to 20 carbon atoms, more preferably 2 to 16 carbon atoms, most preferably 2 to 12 carbon atoms, such as methoxycarbonyl and ethoxcarbonyl), aryloxycarbonyl groups (preferably of 7 to 20 carbon atoms, more preferably 7 to 16 carbon atoms, most preferably 7 to 10 carbon atoms, such as phenoxycarbonyl), acyloxy groups (preferably of 1 to 20 carbon atoms, more preferably 2 to 16 carbon atoms, most preferably 2 to 10 carbon atoms, such as acetoxy and benzoyloxy), acylamino groups (preferably of 1 to 20 carbon atoms, more preferably 2 to 16 carbon atoms, most preferably 2 to 10 carbon atoms, such as acetylamino, butyrylamino, and benzoylamino), alkoxycarbonylamino groups (preferably of 2 to 20 carbon atoms, more preferably 2 to 16 carbon atoms, most preferably 2 to 12 carbon atoms, such as methoxycarbonylamino), aryloxycarbonylamino groups (preferably of 7 to 20 carbon atoms, more preferably 7 to 16 carbon atoms, most preferably 7 to 12 carbon atoms, such as phenyloxycarbonylamino), sulfonylamino groups (preferably of 1 to 20 carbon atoms, more preferably 1 to 16 carbon atoms, most preferably 1 to 12 carbon atoms, such as methanesulfonylamino and benzenesulfonylamino), sulfamoyl groups (preferably of 0 to 20 carbon atoms, more preferably 0 to 16 carbon atoms, most preferably 0 to 12 carbon atoms, such as sulfamoyl, methylsulfamoyl, dimethylsulfamoyl, and phenylsulfamoyl), carbamoyl groups (preferably of 0 to 20 carbon atoms, more preferably 0 to 16 carbon atoms, most preferably 0 to 12 carbon atoms, such as carbamoyl, diethylcarbamoyl; and phenylcarbamoyl), ureido groups (preferably of 1 to 20 carbon atoms, more preferably 1 to 16 carbon atoms, most preferably 1 to 12 carbon atoms, such as ureido, methylureido, and phenylureido), alkylthio groups (preferably of 1 to 20 carbon atoms, more preferably 1 to 16 carbon atoms, most preferably 1 to 12 carbon atoms, such as methylthio and ethylthio), arylthio groups (preferably of 6 to 20 carbon atoms, more preferably 6 to 16 carbon atoms, most preferably 6 to 12 carbon atoms, such as phenylthio), sulfonyl groups (preferably of 1 to 20 carbon atoms, more preferably 1 to 16 carbon atoms, most preferably 1 to 12 carbon atoms, such as mesyl and tosyl), sulfinyl groups (preferably of 1 to 20 carbon atoms, more preferably 1 to 16 carbon atoms, most preferably 1 to 12 carbon atoms, such as methanesulfinyl and benzenesulfinyl), phosphoramide groups (preferably of 1 to 20 carbon atoms, more preferably 1 to 16 carbon atoms, most preferably 1 to 12 carbon atoms, such as diethylphosphoramide and phenylphosphoramide), hydroxy groups, mercapto groups, halogen atoms (e.g., fluorine, chlorine, bromine, and iodine atoms), cyano groups, sulfo groups, carboxy groups, nitro groups, hydroxamic groups, sulfino groups, hydrazino groups, sulfonylthio groups, thiosulfonyl groups, and heterocyclic groups (e.g., imidazolyl, pyridyl, furyl, piperidyl, and morpholyl). These substituents may, in turn, be further substituted. Where there is more than one substituent, they may be identical or different.

Preferred substituents on the aliphatic hydrocarbon groups represented by R₁ are aryl, alkoxy, heterocyclic, cyano, alkoxycarbonyl groups and halogen atoms. Cyano, alkoxycarbonyl, alkoxy groups and halogen atoms are more preferred.

The aryl groups represented by R₁ are preferably monocyclic or fused ring aryl groups having 6 to 30 carbon atoms, more preferably monocyclic or fused ring aryl groups having 6 to 20 carbon atoms, for example, phenyl and naphthyl, with the phenyl being especially preferred. The aryl groups represented by R₁ may have substituents thereon. Examples of such substituents include those described above as the substituents on the aliphatic hydrocarbon groups represented by R₁ as well as alkyl groups (preferably of 1 to 20 carbon atoms, more preferably 1 to 12 carbon atoms, most preferably 1 to 8 carbon atoms, such as methyl, ethyl, isopropyl, tert-butyl, n-octyl, tert-amyl, dodecyl, and cyclohexyl), alkenyl groups (preferably of 2 to 20 carbon atoms, more preferably 2 to 12 carbon atoms, most preferably 2 to 8 carbon atoms, such as vinyl, allyl, 2-butenyl, and 3-pentenyl), and alkynyl groups (preferably of 2 to 20 carbon atoms, more preferably 2 to 12 carbon atoms, most preferably 2 to 8 carbon atoms, such as propargyl and 3-pentynyl).

Preferred substituents on the aryl groups represented by R₁ are alkyl, aryl, alkoxy, aryloxy, acyl, alkoxycarbonyl, acyloxy, acylamino, alkoxycarbonylamino, aryloxycarbonylamino, sulfonylamino, sulfamoylamino, carbamoylamino, ureido, alkylthio, arylthio, sulfonyl, nitro, sulfonylthio, halogen, and cyano. Of these, alkyl, alkoxy, aryloxy, acyl, alkoxycarbonyl, nitro, acylamino, alkylthio, halogen and cyano are more preferred.

The groups represented by R₁ are preferably alkyl groups, and more preferably normal alkyl groups.

The aliphatic hydrocarbon and aryl groups represented by R₂ in formula (1) are as defined above for R₁, with their illustrative examples being also the same. Most preferably, R₂ is phenyl.

The aliphatic hydrocarbon and aryl groups represented by R₃ in formula (1) are as defined above for R₁, with their illustrative examples being also the same. Most preferably, R₃ represents alkyl (such as butyl) and phenyl. 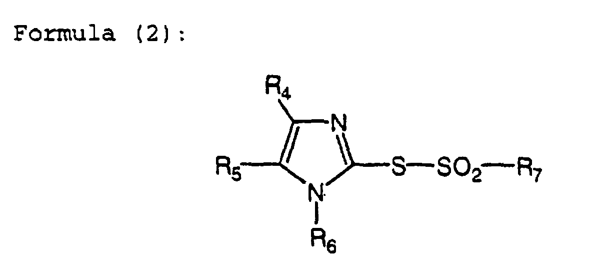 Herein R₄ and R₅ are independently hydrogen, aliphatic hydrocarbon groups or aryl groups, R₆ and R₇ are independently aliphatic hydrocarbon groups or aryl groups.

The aliphatic hydrocarbon and aryl groups represented by R₄ and R₅ in formula (2) are as defined above for R₁ in formula (1), with their illustrative examples being also the same. Most preferably, R₄ and R₅ are hydrogen, alkyl (such as methyl, ethyl and butyl) and phenyl.

The aliphatic hydrocarbon and aryl groups represented by R₆ and R₇ in formula (2) are as defined above for R₁ in formula (1), with their illustrative examples being also the same. Most preferably, R₆ and R₇ are alkyl (such as methyl, butyl and hexyl) and phenyl.

Illustrative examples of the compounds of formulae (1) and (2) are given below. The compounds which can be used herein are not limited thereto.

Illustrative examples of the compound of formula (1) are given below.

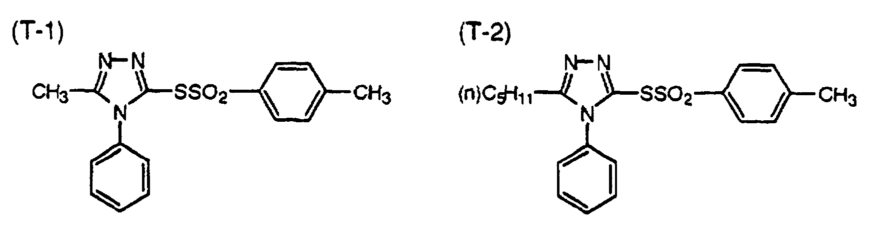

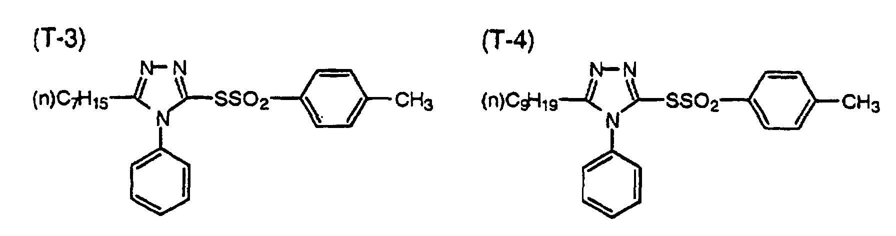

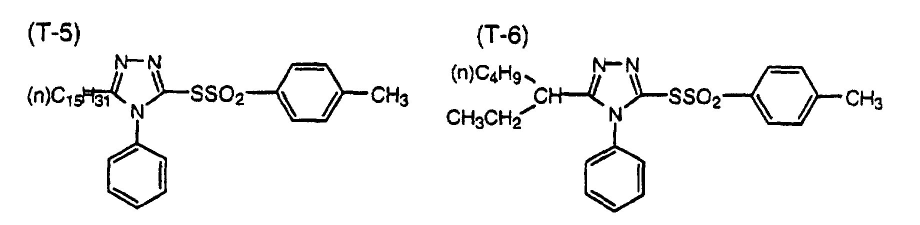

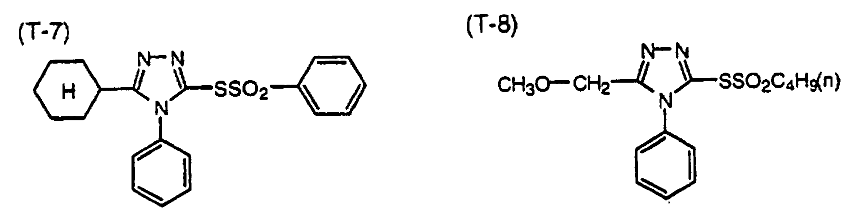

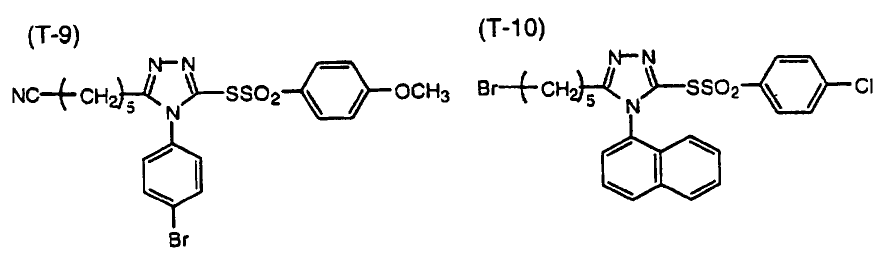

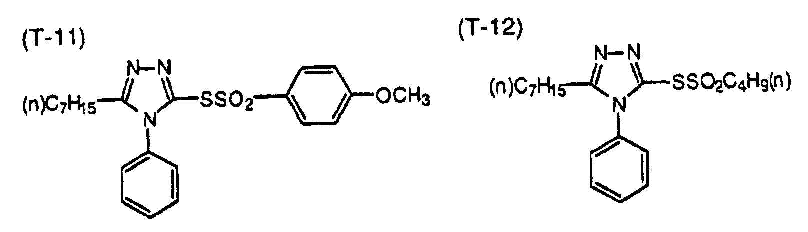

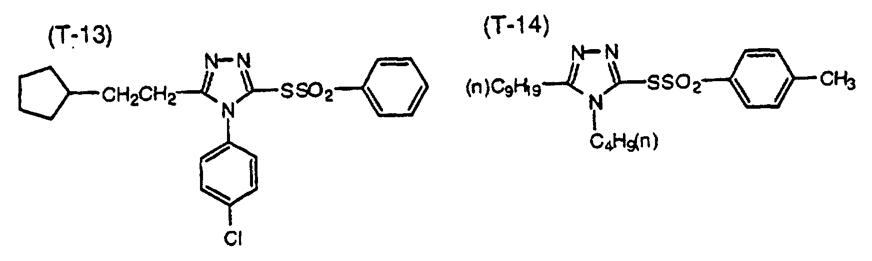

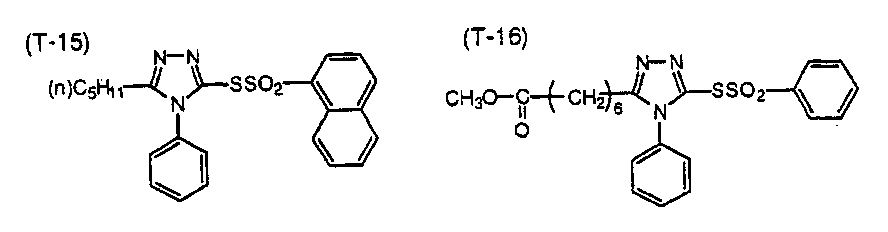

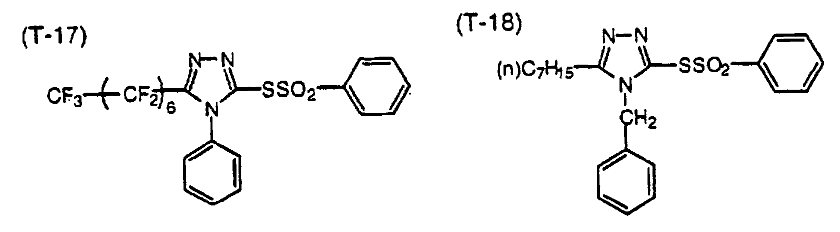

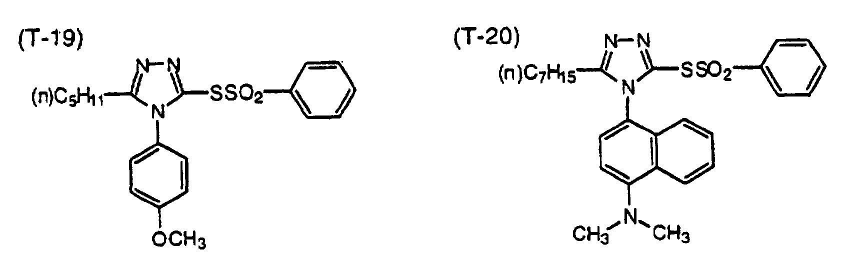

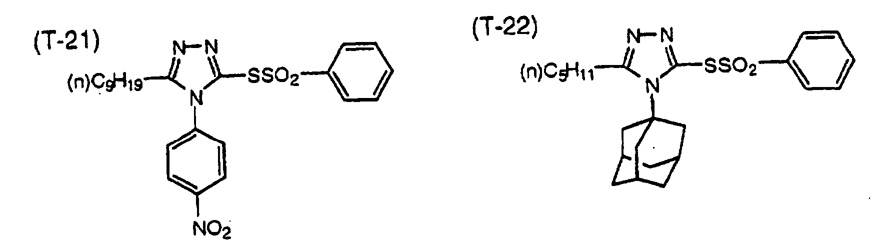

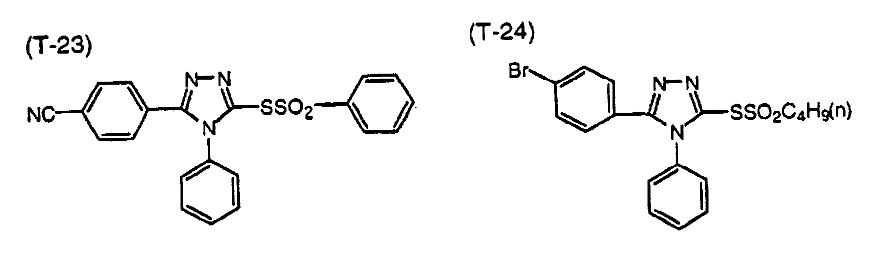

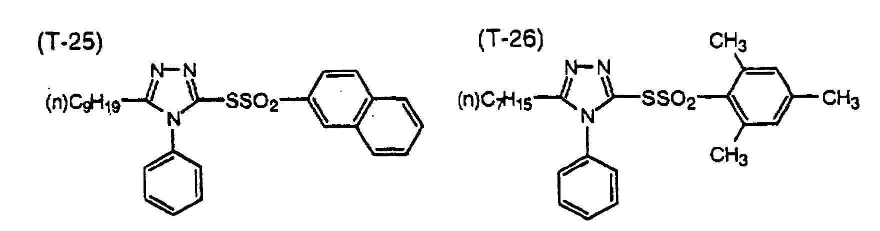

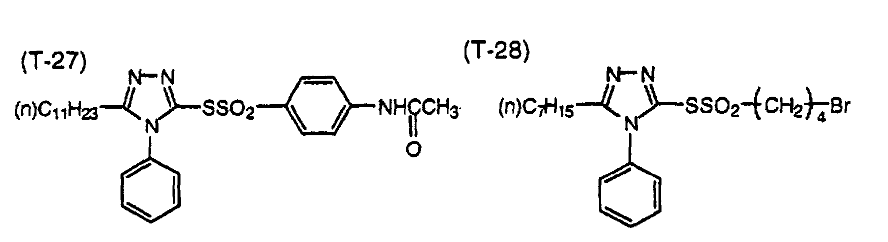

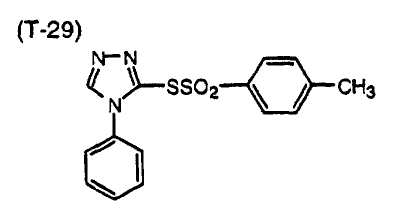

Illustrative examples of the compound of formula (2) are given below.

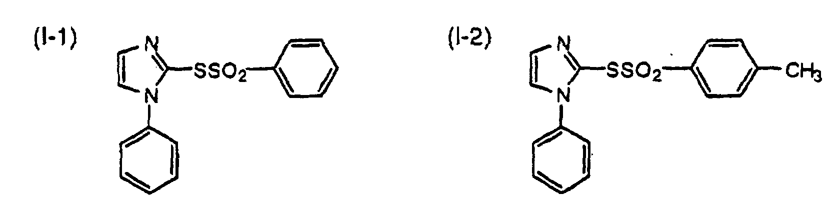

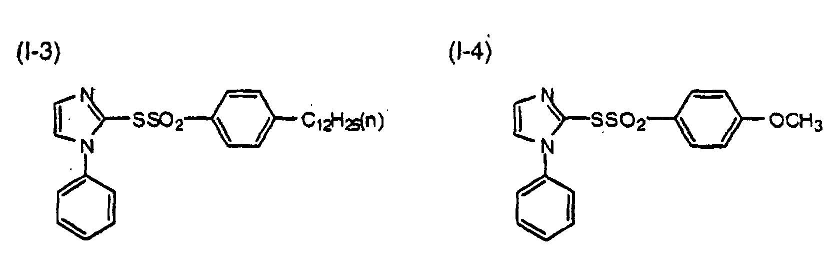

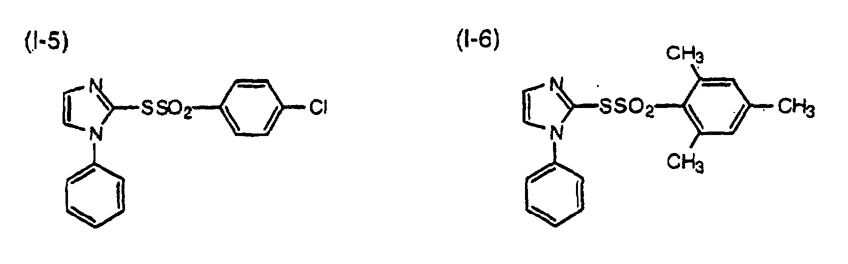

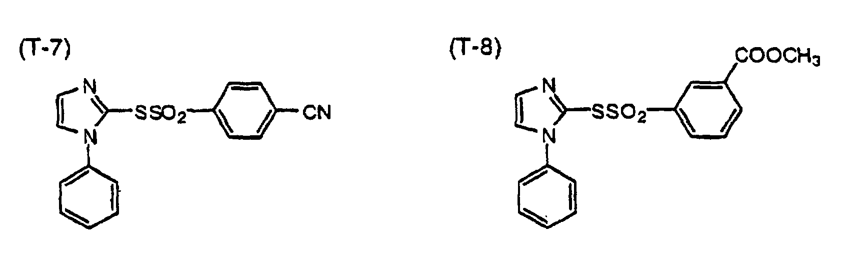

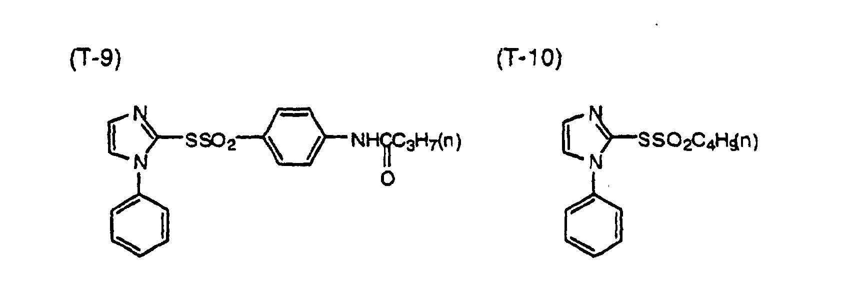

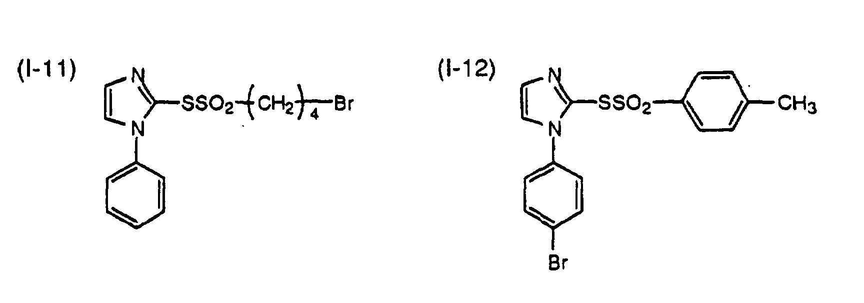

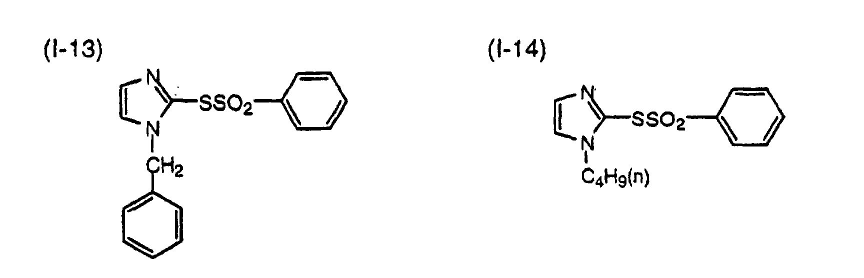

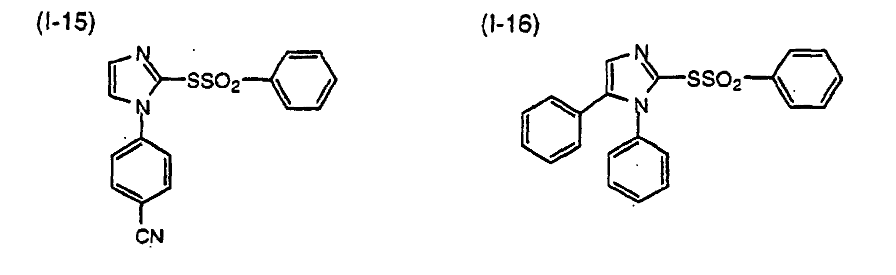

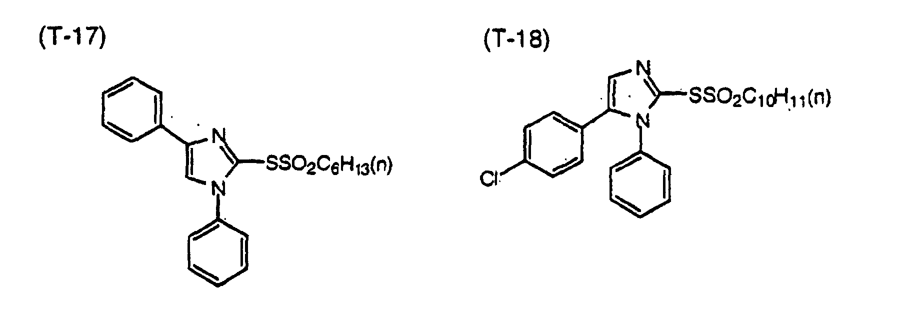

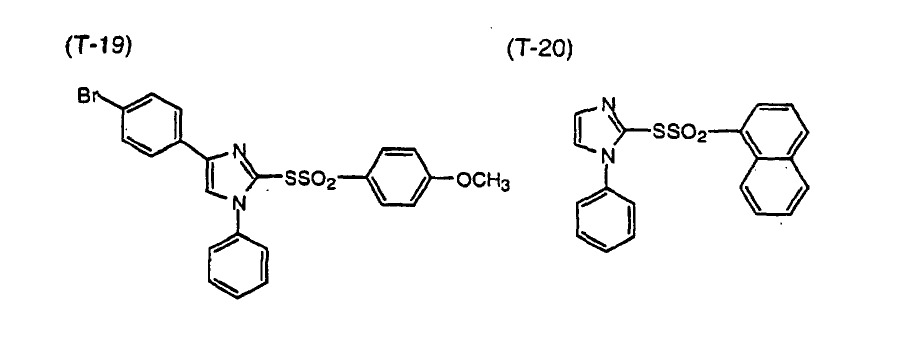

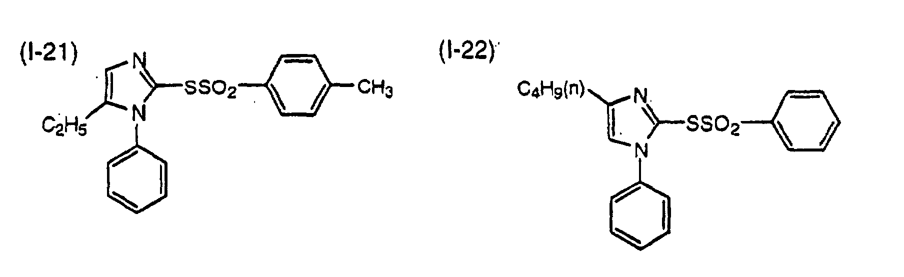

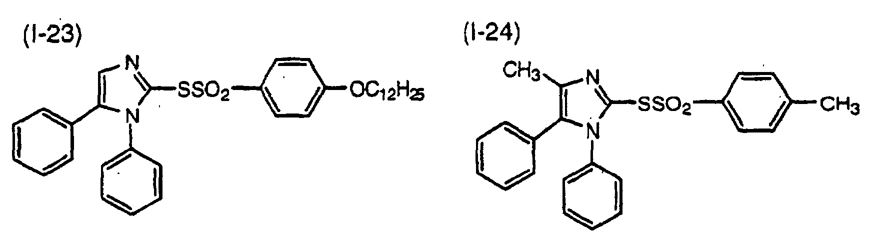

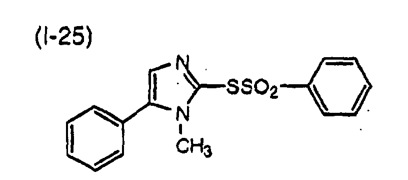

The compounds of formulae (1) and (2) can be readily synthesized through reaction of mercaptotriazoles or mercaptoimidazoles with acid chlorides. Alternatively, they can be readily synthesized by methods as described in "New Experimental Chemistry Series," Vol. 14, pp. 1801-1803 (Japan Chemical Society Ed.), for example, disproportionation reaction of sulfinic acids, oxidation of disulfides, reaction of disulfides with sulfinic acid salts, and reaction of sulfinic acid salts with sulfinyl halides.

The compounds of formula (1) and/or (2) may be used alone or in admixture of two or more. They may be used in an appropriate amount for their purpose, preferably 0.1 to 40 mol%, more preferably 0.5 to 10 mol% based on the total amount of silver salts used.

The compound of formula (1) or (2) may be added in any suitable form, for example, as a solution, emulsion, solid particle dispersion, or a state mordanted with a polymeric mordant. Preferably, the compound is added in a solid particle dispersion or similar form without using organic solvents. The solid particle dispersion may be prepared by well-known dispersion techniques. Exemplary dispersing machines which can be used are sand mills, attritors, pearl mills, super mills, ball mills, impellers, dispersers, KD mills, colloidal mills, dynatrons, three-roll mills, pressure kneaders, Manton Gaulin, and microfluidizers. With respect to the solid particle dispersion apparatus and technology, reference should be made to Kajiuchi and Usui, "Dispersion Rheology and Dispersing Technology," Shinzan Publishing K.K., 1991, pp 357-403 and Tokai Section of the Chemical Engineering Society Ed., "Progress of Chemical Engineering," Vol. 24, Maki Publishing K.K., 1990, pp 184-185. In the solid particle dispersion, dispersed particles usually have a mean particle size of 0.05 to 10.0 µm, preferably 0.05 to 5 µm, more preferably 0.05 to 1.0 µm, most preferably 0.1 to 0.6 µm.

In the photosensitive layer, polyhydric alcohols (e.g., glycerin and diols as described in USP 2,960,404), fatty acids and esters thereof as described in USP 2,588,765 and 3,121,060, and silicone resins as described in BP 955,061 may be added as a plasticizer and lubricant.

In the practice of the invention, contrast enhancers may be used for forming ultrahigh contrast images. Included are hydrazine derivatives as described in USP 5,464,738, 5,496,695, 5,512,411, 5,536,622, Japanese Patent Application Nos. 228627/1995, 215822/1996, 130842/1996, 148113/1996, 156378/1996, 148111/1996, and 148116/1996; compounds having a quaternary nitrogen atom as described in Japanese Patent Application No. 83566/1996, and acrylonitrile compounds as described in USP 5,545,515. Illustrative examples are compounds 1 to 10 in USP 5,464,738, compounds H-1 to H-28 in USP 5,496,695, compounds I-1 to I-86 in Japanese Patent Application No. 215822/1996, compounds H-1 to H-62 in 130842/1996, compounds I-1 to I-21 in 148113/1996, compounds 1 to 50 in 148111/1996, compounds 1 to 40 in 148116/1996, and compounds P-1 to P-26 and T-1 to T-18 in 83566/1996, and compounds CN-1 to CN-13 in USP 5,545,515.

Also in the practice of the invention, ultrahigh contrast promoting agents may be used in combination with the contrast enhancers for forming ultrahigh contrast images. Such ultrahigh contrast promoting agents include the amine compounds described in USP 5,545,505, specifically Compounds AM-1 to AM-5 therein, the hydroxamic acids described in USP 5,545,507, specifically HA-1 to HA-11 therein, the acrylonitriles described in USP 5,545,507, specifically CN-1 to CN-13 therein, the hydrazine compounds described in USP 5,558,983, specifically CA-1 to CA-6 therein, the onium salts described in Japanese Patent Application No. 132836/1996, specifically A-1 to A-42, B-1 to B-27 and C-1 to C-14.

The synthesis methods, addition methods, and addition amounts of these ultrahigh contrast enhancers and ultrahigh contrast promoting agents are as described in the above-listed patents.

A surface protective layer may be provided in the photosensitive element which is prepared according to the method of the present invention for the purpose of preventing sticking of the image forming layer. In the surface protective layer, any desired antisticking material may be used. Examples of the, antisticking material include wax, silica particles, styrene-containing elastomeric block copolymers (e.g., styrenebutadiene-styrene and styrene-isoprene-styrene), cellulose acetate, cellulose acetate butyrate, cellulose propionate and mixtures thereof.

In the emulsion layer which is prepared according to the method of the invention or a protective layer therefor there may be used light absorbing substances and filter dyes as described in USP 3,253,921, 2,274,782, 2,527,583, and 2,956,879. The dyes may be mordanted as described in USP 3,282,699. The filer dyes are used in such amounts that the layer may have an absorbance of 0.1 to 3, especially 0.2 to 1.5 at the exposure wavelength.

In the emulsion layer or a protective layer therefor, there may be used matte agents, for example, starch, titanium dioxide, zinc oxide, and silica as well as polymer beads including beads of the type described in USP 2,992,101 and 2,701,245. The emulsion layer side surface may have any degree of matte insofar as no star dust failures occur although a Bekk smoothness of 200 to 10,000 seconds, especially 300 to 10,000 seconds is preferred.

The thermographic photographic emulsion which is prepared according to the method of one preferred embodiment of the invention is contained in one or more layers on a support. In the event of single layer construction, it should contain an organic silver salt, silver halide, developing agent, and binder, and other optional additives such as a toner, coating aid and other auxiliary agents. In the event of two-layer construction, a first emulsion layer which is generally a layer disposed adjacent to the support should contain an organic silver salt and silver halide and a second emulsion layer or both the layers contain other components. Also envisioned herein is a two-layer construction consisting of a single emulsion layer containing all the components and a protective topcoat. In the case of multi-color sensitive photothermographic material, a combination of such two layers may be employed for each color. Also a single layer may contain all necessary components as described in USP 4,708,928. In the case of multi-dye, multi-color sensitive photothermographic material, emulsion layers are distinctly supported by providing a functional or non-functional barrier layer therebetween as described in USP 4,460,681.

In the photosensitive layer, a variety of dyes and pigments may be used from the standpoints of improving tone and preventing irradiation. Any desired dyes and pigments may be used in the invention. Useful pigments and dyes include those described in Colour Index and both organic and inorganic, for example, pyrazoloazole dyes, anthraquinone dyes, azo dyes, azomethine dyes, oxonol dyes; carbocyanine dyes, styryl dyes, triphenylmethane dyes, indoaniline dyes, indophenol dyes, and phthalocyanine dyes. The preferred dyes used herein include anthraquinone dyes (e.g., Compounds 1 to 9 described in JP-A 341441/1993 and Compounds 3-6 to 3-18 and 3-23 to 3-38 described in JP-A 165147/1993), azomethine dyes (e.g., Compounds 17 to 47 described in JP-A 341441/1993), indoaniline dyes (e.g., Compounds 11 to 19 described in JP-A 289227/1993, Compound 47 described in JP-A 341441/1993 and Compounds 2-10 to 2-11 described in JP-A 165147/1993), and azo dyes (e.g., Compounds 10 to 16 described in JP-A 341441/1993). The dyes and pigments may be added in any desired form such as solution, emulsion or solid particle dispersion or in a form mordanted with polymeric mordants. The amounts of these compounds used are determined in accordance with the desired absorption although the compounds are generally used in amounts of 1 µg to 1 g per square meter of the recording element.

In the practice of the invention, an antihalation layer may be disposed on the side of the photosensitive layer remote from the light source. The antihalation layer preferably has a maximum absorbance of 0.3 to 2 in the desired wavelength range, more preferably an absorbance of 0.5 to 2 at the exposure wavelength, and an absorbance of 0.001 to less than 0.5 in the visible region after processing, and is also preferably a layer having an optical density of 0.001 to less than 0.3.

Where an antihalation dye is used in the invention, it may be selected from various compounds insofar as it has the desired absorption in the wavelength range, is sufficiently low absorptive in the visible region after processing, and provides the antihalation layer with the preferred absorbance profile. Exemplary antihalation dyes are given below though the dyes are not limited thereto. Useful dyes which are used alone are described in JP-A 56458/1984, 216140/1990, 13295/1995, 11432/1995, USP 5,380,635, JP-A 68539/1990, page 13, lower-left column, line 1 to page 14, lower-left column, line 9, and JP-A 24539/1991, page 14, lower-left column to page 16, lower-right column. It is further preferable in the practice of the invention to use a dye which will decolorize during processing. Illustrative, non-limiting, examples of decolorizable dyes are disclosed in JP-A 139136/1977, 132334/1978, 501480/1981, 16060/1982, 68831/1982, 101835/1982, 182436/1984, 36145/1995, 199409/1995, JP-B 33692/1973, 16648/1975, 41734/1990, USP 4,088,497, 4,283,487, 4,548,896, and 5,187,049.

In one preferred embodiment, the photothermographic element which is prepared according to the method of the invention is a one-side photosensitive element having at least one photosensitive layer containing a silver halide emulsion on one side and a back layer on the other side of the support.

In the practice of the invention, a matte agent may be added to the one-side photosensitive element for improving transportation efficiency. The matte agents used herein are generally microparticulate water-insoluble organic or inorganic compounds. There may be used any desired one of matte agents, for example, well-known matte agents including organic matte agents as described in USP 1,939,213, 2,701,245, 2,322,037, 3,262,782, 3,539,344, and 3,767,448 and inorganic matte agents as described in USP 1,260,772, 2,192,241, 3,257,206, 3,370,951, 3,523,022, and 3,769,020. Illustrative examples of the organic compound which can be used as the matte agent are given below; exemplary water-dispersible vinyl polymers include polymethyl acrylate, polymethyl methacrylate, polyacrylonitrile, acrylonitrile-α-methylstyrene copolymers, polystyrene, styrene-divinylbenzene copolymers, polyvinyl acetate, polyethylene carbonate, and polytetrafluoroethylene; exemplary cellulose derivatives include methyl cellulose, cellulose acetate, and cellulose acetate propionate; exemplary starch derivatives include carboxystarch, carboxynitrophenyl starch, ureaformaldehyde-starch reaction products, gelatin hardened with well-known curing agents, and hardened gelatin which has been coaceruvation hardened into microcapsulated hollow particles. Preferred examples of the inorganic compound which can be used as the matte agent include silicon dioxide, titanium dioxide, magnesium dioxide, aluminum oxide, barium sulfate, calcium carbonate, silver chloride and silver bromide desensitized by a well-known method, glass, and diatomaceous earth. The aforementioned matte agents may be used as a mixture of substances of different types if necessary. The size and shape of the matte agent are not critical. The matte agent of any particle size may be used although matte agents having a particle size of 0.1 µm to 30 µm are preferably used in the practice of the invention. The particle size distribution of the matte agent may be either narrow or wide. Nevertheless, since the haze and surface luster of coating are largely affected by the matte agent, it is preferred to adjust the particle size, shape and particle size distribution of a matte agent as desired during preparation of the matte agent or by mixing plural matte agents.

In the practice of the invention, the back layer should preferably have a degree of matte as expressed by a Bekk smoothness of 10 to 250 seconds, more preferably 50 to 180 seconds.

In the recording element which is prepared according to the method of the invention, the matte agent is preferably contained in an outermost surface layer, a layer functioning as an outermost surface layer, a layer close to the outer surface or a layer functioning as a so-called protective layer.

In the practice of the invention, the binder used in the back layer is preferably transparent or translucent and generally colorless. Exemplary binders are naturally occurring polymers, synthetic resins, polymers and copolymers, and other film-forming media, for example, gelatin, gum arabic, poly(vinyl alcohol), hydroxyethyl cellulose, cellulose acetate, cellulose acetate butyrate, poly(vinyl pyrrolidone), casein, starch, poly(acrylic acid), poly(methyl methacrylate), polyvinyl chloride, poly(methacrylic acid), copoly(styrene-maieic anhydride), copoly(styrene-acrylonitrile), copoly(styrene-butadiene), polyvinyl acetals (e.g., polyvinyl formal and polyvinyl butyral), polyesters, polyurethanes, phenoxy resins, poly(vinylidene chloride), polyepoxides, polycarbonates, poly(vinyl acetate), cellulose esters, and polyamides. The binder may be dispersed in water, organic solvent or emulsion to form a dispersion which is coated to form a layer.

The back layer preferably exhibits a maximum absorbance of 0.3 to 2, more preferably 0.5 to 2 in the predetermined wavelength range and an absorbance of 0.001 to less than 0.5 in the visible range after processing. Further preferably, the back layer has an optical density of 0.001 to less than 0.3. Examples of the antihalation dye used in the back layer are the same as previously described for the antihalation layer.

A backside resistive heating layer as described in USP 4,460,681 and 4,374,921 may be used in a photographic thermographic image recording system according to the present invention.

According to the invention, a hardener may be used in various layers including an image forming layer, protective layer, and back layer. Examples of the hardener include polyisocyanates as described in USP 4,281,060 and JP-A 208193/1994, epoxy compounds as described in USP 4,791,042, and vinyl sulfones as described in JP-A 89048/1987.

A surfactant may be used for the purposes of improving coating and electric charging properties. The surfactants used herein may be nonionic, anionic, cationic and fluorinated ones. Examples include fluorinated polymer surfactants as described in JP-A 170950/1987 and USP 5,380,644, fluorinated surfactants as described in JP-A 244945/1985 and 188135/1988, polysiloxane surfactants as described in USP 3,885,965, and polyalkylene oxide and anionic surfactants as described in JP-A 301140/1994.

Examples of the solvent used herein are described in "New Solvent Pocket Book," Ohm K.K., 1994, though not limited thereto. The solvent used herein should preferably have a boiling point of 40 to 180°C. Exemplary solvents include hexane, cyclohexane, toluene, methanol, ethanol, isopropanol, acetone, methyl ethyl ketone, ethyl acetate, 1,1,1-trichloroethane, tetrahydrofuran, triethylamine, thiophene, trifluoroethanol, perfluoropentane, xylene, n-butanol, phenol, methyl isobutyl ketone, cyclohexanone, butyl acetate, diethyl carbonate, chlorobenzene, dibutyl ether, anisole, ethylene glycol diethyl ether, N,N-dimethylformamide, morpholine, propanesultone, perfluorotributylamine, and water.

### Support

According to the invention, the photographic emulsion for heat development may be coated on a variety of supports. Typical supports include polyester film, subbed polyester film, poly(ethylene terephthalate) film, polyethylene naphthalate film, cellulose nitrate film, cellulose ester film, poly(vinyl acetal) film, polycarbonate film and related or resinous materials, as well as glass, paper, metals, etc. Often used are flexible substrates, typically paper supports, specifically baryta paper and paper supports coated with partially acetylated α-olefin polymers, especially polymers of α-olefins having 2 to 10 carbon atoms such as polyethylene, polypropylene, and ethylene-butene copolymers. The supports are either transparent or opaque, preferably transparent.

The photosensitive element which is prepared according to the method of the invention may have an antistatic or electroconductive layer, for example, a layer containing soluble salts (e.g., chlorides and nitrates), an evaporated metal layer, or a layer containing ionic polymers as described in USP 2,861,056 and 3,206,312 or insoluble inorganic salts as described in USP 3,428,451.

A method for producing color images using the thermographic recording element which is prepared according to the method of the invention is as described in JP-A 13295/1995, page 10, left column, line 43 to page 11, left column, line 40. Stabilizers for color dye images are exemplified in BP 1,326,889, USP 3,432,300, 3,698,909, 3,574,627, 3,573,050, 3,764,337, and 4,042,394.

In the practice of the invention, the thermographic photographic emulsion can be applied by various coating procedures including dip coating, air knife coating, flow coating, and extrusion coating using a hopper of the type described in USP 2,681,294. If desired, two or more layers may be concurrently coated by the methods described in USP 2,761,791 and BP 837,095.

In the thermographic recording element which is prepared according to the method of the invention, there may be contained additional layers, for example, a dye accepting layer for accepting a mobile dye image, an opacifying layer when reflection printing is desired, a protective topcoat layer, and a primer layer well known in the photothermographic art. The recording material of the invention is preferably such that only a single sheet of the recording material can form an image. That is, it is preferred that a functional layer necessary to form an image such as an image receiving layer does not constitute a separate member.

The thermographic recording element which is prepared according to the method of the invention may be developed by any desired method although it is generally developed by heating after imagewise exposure. The preferred developing temperature is about 80 to 250°C, more preferably 100 to 140°C. The preferred developing time is about 1 to 180 seconds, more preferably about 10 to 90 seconds.

Any desired technique may be used for the exposure of the thermographic recording element of the invention. The preferred light source for exposure is a laser, for example, a gas laser, YAG laser, dye laser or semiconductor laser. A semiconductor laser combined with a second harmonic generating device is also useful.

Upon exposure, the thermographic recording element which is prepared according to the method of the invention tends to generate interference fringes due to low haze. Known techniques for preventing generation of interference fringes are a technique of obliquely directing laser light to an image recording element as disclosed in JP-A 113548/1993 and the utilization of a multi-mode laser as disclosed in WO 95/31754. These techniques are preferably used herein.

Upon exposure of the thermographic recording element which is prepared according to the method of the invention, exposure is preferably made by overlapping laser light so that no scanning lines are visible, as disclosed in SPIE, Vol. 169, Laser Printing 116-128 (1979), JP-A 51043/1992, and WO 95/31754.

### EXAMPLE

Examples of the present invention are given below by way of illustration and not by way of limitation.

The trade names used in Examples have the following meaning.
LACSTAR 3307B: styrene-butadiene rubber (SBR) latex, by Dai-Nippon Ink & Chemicals K.K. The polymer has an equilibrium moisture content of 0.6 wt% at 25°C and RH 60%, and the dispersed particles have a mean particle diameter of about 0.1 to 0.15 µm.
HYDRAN AP-10: aqueous polyester urethane resin, by Dai-Nippon Ink & Chemicals K.K.

### Example 1

### Silver halide grains A

In 700 ml of water were dissolved 22 g of phthalated gelatin and 30 mg of potassium bromide. The solution was adjusted to pH 5.0 at a temperature of 40°C. To the solution, 159 ml of an aqueous solution containing 18.6 g of silver nitrate and an aqueous solution containing potassium bromide and potassium iodide in a molar ratio of 92:8 were added over 10 minutes by the controlled double jet method while maintaining the solution at pAg 7.8. Then, 476 ml of an aqueous solution containing 55.4 g of silver nitrate and an aqueous solution containing 6 µmol/liter of dipotassium hexachloroiridate and 1 mol/liter of potassium bromide were added over 30 minutes by the controlled double jet method while maintaining the solution at pAg 7.6. The solution was then desalted by lowering the pH thereof to cause flocculation and sedimentation. With 0.2 g of phenoxyethanol added, the solution was adjusted to pH 5.9 and pAg 8.0. There were obtained cubic grains having a silver iodide content of 8 mol% in the core and 2 mol% on the average, a mean grain size of 0.07 µm, a coefficient of variation of the projected area diameter of 9%, and a (100) face proportion of 85%.

The thus obtained silver halide grains were heated at 60°C, to which 85 µmol of sodium thiosulfate, 6 µmol of 2,3,4,5,6-pentafluorophenyldiphenylphosphine selenide, 1.7 µmol of Tellurium Compound 1, 3.9 µmol of chloroauric acid, and 220 µmol of thiocyanic acid were added per mol of silver. The emulsion was ripened for 120 minutes and then cooled to 50°C. With stirring, 9x10⁻⁴ mol of Sensitizing Dye A was added to the emulsion. Further, 3.7 mol% based on silver of potassium iodide and 5x10⁻³ mol of Compound A per mol of silver were added to the emulsion, which was stirred for 30 minutes. Quenching to 30°C completed the preparation of silver halide grains A.

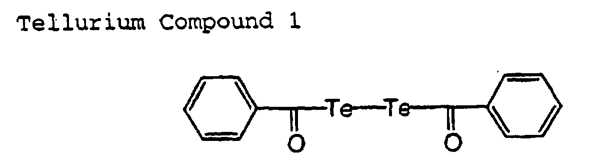

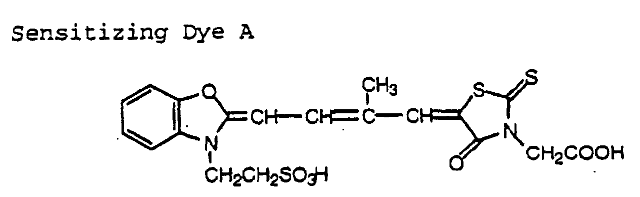

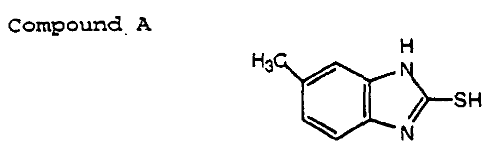

### Organic acid silver microcrystalline dispersion A

A mixture of 40 g of behenic acid, 7.3 g of stearic acid, and 500 ml of distilled water was stirred at 90°C for 20 minutes, 187 ml of a 1N NaOH aqueous solution was added over 15 minutes, and 61 ml of a 1N nitric acid aqueous solution was then added. The resulting solution was cooled to 50°C. Then 124 ml of an aqueous solution of IN silver nitrate was added over 2 minutes to the solution, which was stirred for 40 minutes. Thereafter, the solids were separated by centrifugation and washed with water until the water filtrate reached a conductivity of 30 µS/cm. The thus collected solids were handled as wet cake without drying. To 33.4 g calculated as dry solids of the wet cake were added 12 g of polyvinyl alcohol and 150 ml of water. They were thoroughly mixed to form a slurry. The slurry was admitted into a dispersing machine Micro-Fluidizer M-110-E/H (manufactured by Microfluidex Corporation, wall impact type chamber). The machine was operated for dispersion under an impact pressure of 500 kg/cm². There was obtained a microcrystalline dispersion A of needle grains of organic acid silver having a mean minor diameter of 0.04 µm, a mean major diameter of 0.8 µm and a coefficient of variation of the projected area of 35% as determined by electron microscopic observation.

### Solid particle dispersion of reducing agent

To 20 g of 1,1-bis(2-hydroxy-3,5-dimethylphenyl)-3,5,5-trimethylhexane were added 3.0 g of modified polyvinyl alcohol MP203 (Kurare K.K.) and 77 ml of water. They were thoroughly agitated to form a slurry, which was allowed to stand for 3 hours. A vessel was charged with the slurry together with 360 g of zirconia beads having a mean diameter of 0.5 mm. A dispersing machine 1/4G Sand Grinder Mill (manufactured by Imex K.K.) was operated for 3 hours for dispersion, obtaining a solid particle dispersion of the reducing agent in which particles with a diameter of 0.3 to 1.0 µm accounted for 80% by weight.

### Solid particle dispersion of antifoggant

To 10 g of tribromomethylphenylsulfone were added 1.5 g of hydroxypropyl methyl cellulose and 88.5 g of water. They were thoroughly agitated to form a slurry, which was allowed to stand for 3 hours. The subsequent procedure was the same as in the preparation of the solid particle dispersion of the reducing agent, obtaining a solid particle dispersion of the antifoggant in which particles with a diameter of 0.3 to 1.0 µm accounted for 70% by weight.

### Solid particle dispersion of development accelerator

To 5 g of 3,4-dihydro-4-oxo-1,2,3-benzotriazine were added 1.0 g of modified polyvinyl alcohol MP203 (Kurare K.K.) and 94.0 ml of water. They were thoroughly agitated to form a slurry, which was allowed to stand for 2 hours. The subsequent procedure was the same as in the preparation of the solid particle dispersion of the reducing agent, obtaining a solid particle dispersion of the development accelerator in which particles with a diameter of 0.4 to 1.0 µm accounted for 70% by weight.

### Ultrafiltration of polymer latex

To 1 liter of a SBR latex LACSTAR 3307B (Dai-Nippon Ink & Chemicals K.K., polymer concentration 49% by weight) or an aqueous polyester urethane resin HYDRAN AP-10 (Dai-Nippon Ink & Chemicals K.K., polymer concentration 30% by weight) was added 9 liters of distilled water having a conductivity of 0.67 µS/cm. The dilution was subject to ultrafiltration by means of a Microsa UF Labomodule ACP-1050 (by Asahi Chemicals K.K., fractional molecular weight 13,000). This step was repeated several times, obtaining a ultrafiltrated latex. By repeating ultrafiltration while adding distilled water, the ionic conductivity of the latex was reduced. The ionic conductivities of the latexes before and after ultrafiltration are shown in Table 1. It is noted that the ionic conductivity is as measured at a polymer concentration of 25% by weight and 25°C.

### Dialysis of polymer latex

Using a dialysis cellulose tube C-65 (by VISKASE, fractional molecular weight 12,000-14,000), the same two latexes as used in the ultrafiltration treatment were subject to dialysis with distilled water for several days. There were obtained latexes as dialyzed. The ionic conductivities of the dialyzed latexes (polymer concentration 25% by weight, 25°C) are shown in Table 1.

### Anti-irradiation dyestuff microparticulates A

In 300 cc of ethyl acetate were dissolved 10 g of Dyestuff and 23.3 g of microparticulate polymethyl methacrylate. A solution of 20 g of Kurare Poval PVA205 (Kurare K.K.) in 500 cc of water was added thereto and agitated at a high speed by a homogenizer for emulsion dispersion. The ethyl acetate was then fully volatilized off, completing the preparation of anti-irradiation dyestuff microparticulates A. Microparticulates with a diameter of 0.1 to 0.8 µm accounted for 70% by weight or more.

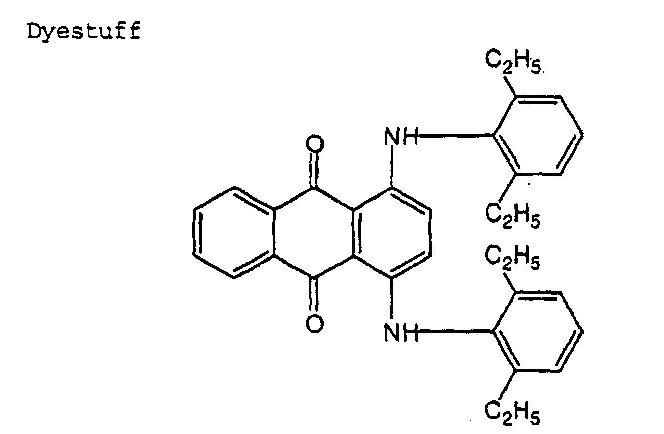

### Emulsion layer coating solution

An emulsion layer coating solution was prepared by adding the silver halide grains A (equivalent to 10 mol% of silver halide per mol of the organic acid silver) and the following polymer latex (as the binder) and components to the organic acid silver microcrystalline dispersion A (equivalent to 1 mol of silver).

| | |
|---|---|
| LACSTAR 3307B (SBR latex) | 431 g |
| as delivered | coated sample No. 1 |
| as dialyzed | coated sample No. 2 |
| as ultrafiltrated | coated sample Nos. 3, 4 |
| HYDRAN AP-10 (aqueous polyester urethane resin) | 431 g |
| as delivered | coated sample No. 5 |
| as dialyzed | coated sample No. 6 |
| as ultrafiltrated | coated sample No. 7 |
| 1,1-bis(2-hydroxy-3,5-dimethylphenyl)-3,5,5-trimethylhexane (solid particle dispersion) | 94 g |
| 4-methylphthalazine | 3.3 g |
| 3,4-dihydro-4-oxo-1,2,3-benzotriazine (solid particle dispersion) | 4.6 g |
| Tribromomethylphenylsulfone (solid particle dispersion) | 24 g |
| MP203 (polyvinyl alcohol by Kurare K.K.) | 22 g |
| Anti-irradiation dyestuff A an amount to provide a coated film with an absorbance of 0.3 at 647 nm | |

### Emulsion surface protective layer coating solution

A surface protective layer coating solution was prepared by adding 0.26 g of Surfactant A, 0.10 g of Surfactant 3, 1.0 g of polymethyl methacrylate (mean particle size 2.5 µm), 0.4 g of 1,2-bis(vinylsulfonylacetamide)ethane, 1.2 g of 4-methylphthalic acid and 66 g of water to 10 g of inert gelatin.

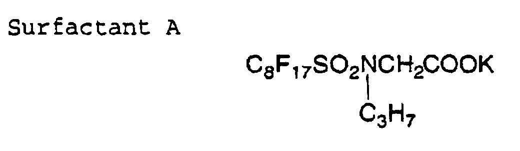

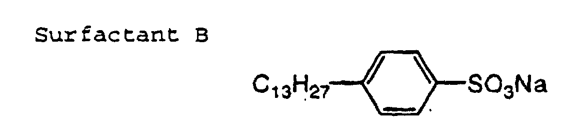

### Decolorizable dye dispersion

To 35 g of ethyl acetate, 2.5 g of Compound 1 and 7.5 g of Compound 2 were added, followed by stirring for dissolution. To this solution, 50 g of a 10% by weight polyvinyl alcohol solution was added. The mixture was agitated for 5 minutes by a homogenizer. Thereafter, the ethyl acetate was removed by volatilization. Dilution with water yielded a decolorizable dye dispersion.

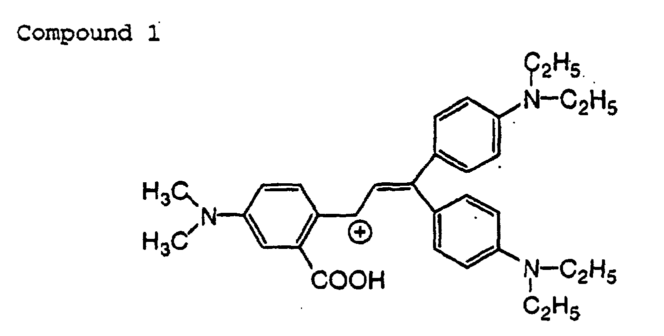

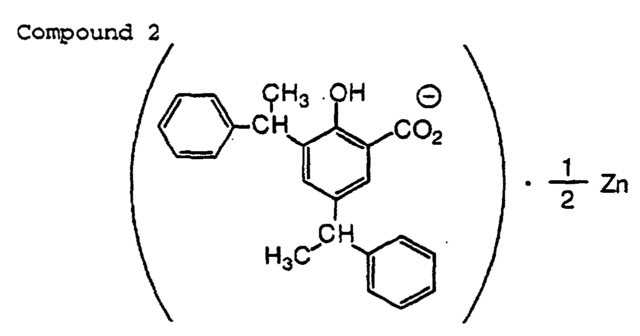

### Back surface coating solution

A back surface coating solution was prepared by adding 51 g of the decolorizable dye dispersion, 20 g of Compound 3, 250 g of water, and 2.0 g of spherical silica Sildex H121 (Dokai Chemical K.K., mean particle size 12 µm) to 30 g of polyvinyl alcohol.

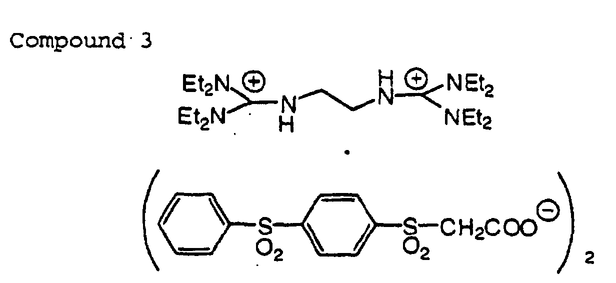

### Undercoating solution A

An undercoating solution A was prepared by adding 50 g of microparticulate polystyrene having a mean particle size of 0.2 µm and 20 ml of 1 wt% Surfactant C to 200 ml of a 30% polyester copolymer water dispersion Pesresin A-515GB (Takamatsu Yushi K.K.) and adding distilled water thereto to a total volume of 1,000 ml.

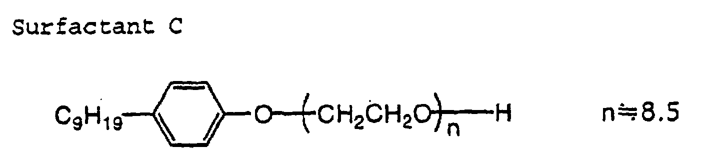

### Undercoating solution B

An undercoating solution B was prepared by adding 200 ml of a 30% styrene-butadiene copolymer water dispersion (styrene/butadiene/itaconic acid = 47/50/3 in weight ratio) and 0.1 g of microparticulate polystyrene having a mean particle size of 2.5 µm to 680 ml of distilled water and adding distilled water thereto to a total volume of 1,000 ml.

### Undercoating solution C

An undercoating solution C was prepared by dissolving 10 g of inert gelatin in 500 ml of distilled water, adding thereto 40 g of a 40 wt% water dispersion of composite tin oxide-antimony oxide microparticulates as described in JP-A 20033/1986 and adding distilled water thereto to a total volume of 1,000 ml.

### Undercoated support

One surface (photosensitive side) of a biaxially oriented polyethylene terephthalate (PET) support of 160 µm thick was subjected to corona discharge treatment. The undercoating solution A was applied to the treated surface by means of a bar coater to a wet coverage of 5 cc/m², followed by drying at 180°C for 5 minutes. The coating had a dry thickness of about 0.3 µm. The other or back surface of the support was then subjected to corona discharge treatment. The undercoating solution B was applied to the back surface by means of a bar coater to a wet coverage of 5 cc/m², followed by drying at 180°C for 5 minutes to give a dry thickness of about 0.3 µm. The undercoating solution C was applied onto the undercoat B by means of a bar coater to a wet coverage of 3 cc/m², followed by drying at 180°C for 5 minutes to give a dry thickness of about 0.03 µm.

### Coated sample

The emulsion layer coating solution was applied to the 160-µm PET support so as to give a silver coverage of 1.8 g/m², and the emulsion surface protective layer coating solution was concurrently applied onto the emulsion layer so as to give a gelatin coverage of 1.8 g/m² in a multiple-coating manner. After drying, the back surface coating solution was applied to the back side of the support opposite to the emulsion layer so as to give an optical density of 0.7 at 650 nm, completing the preparation of coated sample Nos. 1 to 7.

### Photographic properties

The coated sample was exposed to light at an incident angle of 30° by means of a 647-nm Kr laser sensitometer having a maximum power of 500 mW and then developed by heating at 120°C for 20 seconds. The image thus obtained was examined for fog and sensitivity by means of a densitometer. The sensitivity is a reciprocal of a ratio of an exposure dose providing a density of the fog plus 1.0 and expressed in relative value based on a sensitivity of 100 for coated sample No. 1. The results are shown in Table 1.

### Image stability after image formation

The coated sample was exposed and developed as above and thereafter, kept for one month under a light-shielded condition at 40°C whereupon the image was visually examined according to the following criteria.
Exc.: substantially no change
Good: slight tone changes, but inoffensive
Fair: image areas discolored, but practically acceptable
Poor: fog areas discolored, increased density, unacceptable

The results are shown in Table 1.

**Table 1**

| Coated sample | Polymer latex | Separation functional polymer treatment | Conductivity (mS/cm) | Photographic properties | | Image stability |
|---|---|---|---|---|---|---|
| | | | | Fog | Sensitivity | |
| 1* | 3307B | none | 3.5 | 0.16 | 100 | Fair |
| 2 | 3307B | dialysis | 0.9 | 0.08 | 157 | Exc. |
| 3 | 3307B | ultrafiltration | 1.8 | 0.11 | 135 | Good |
| 4 | 3307B | ultrafiltration | 0.7 | 0.09 | 165 | Exc. |
| 5* | AP-10 | none | 1.2 | 0.16 | 116 | Good |
| 6 | AP-10 | dialysis | 0.6 | 0.10 | 138 | Exc. |
| 7 | AP-10 | ultrafiltration | 0.5 | 0.11 | 154 | Exc. |

| | | | | | | |
|---|---|---|---|---|---|---|
| * comparison | | | | | | |

It is evident from Table 1 that surprisingly, photosensitive samples using the polymer latexes treated with a dialysis membrane or ultrafiltration membrane have a low fog and a high sensitivity. Unexpectedly, using the polymer latexes treated with a dialysis membrane or ultrafiltration membrane is effective for improving the image stability after image formation and hence, the performance as an image-forming element.

There has been described an image recording element in which a polymer latex which has been treated with a separation functional polymer and has a specific ionic conductivity is used as the binder, thereby achieving a low fog, high sensitivity, and improved image stability.

Reasonable modifications and variations are possible from the foregoing disclosure without departing from the scope of the present invention as defined by the claims.

## Claims

1. A method for producing a recording element comprising a support and at least one image-forming layer on at least one surface of the support, comprising the steps of:
(i) treating a polymer latex with a separation functional polymer in the form of an ion-exchange resin or a separation membrane to reduce the latex's ionic conductivity to 2.5 mS/cm or less when measured at a polymer concentration of 25% by weight at 25°C;
(ii) coating the support with either:
(a) a thermographic layer-coating solution containing a non-photosensitive organic silver salt, a reducing agent for the organic silver salt, and the treated polymer latex; or
(b) a photothermographic layer-coating solution containing a photosensitive silver halide, a non-photosensitive organic silver salt, a reducing agent for the organic silver salt and the treated polymer latex; and
(iii) drying the coating to form the image-forming layer.

2. A method according to Claim 1, wherein the coating solution is an aqueous dispersion comprising an aqueous solvent containing at least 30% by weight of water.

3. A method according to Claim 1 or Claim 2, wherein said separation functional polymer is a separation membrane.

4. A method according to Claim 3, wherein said separation membrane is an ultrafiltration membrane or a dialysis membrane.

5. A method according to any preceding Claim, wherein said polymer latex comprises a polymer having an equilibrium moisture content at 25°C and RH 60% of up to 2% by weight.

## Patentansprüche

1. Verfahren zur Herstellung eines Aufzeichnungselements, das einen Träger und mindestens eine bilderzeugende Schicht auf mindestens einer Oberfläche des Trägers umfasst, das folgende Schritte umfasst:
(i) Behandeln eines Polymerlatex mit einem funktionellen Trennpolymer in Form eines Ionenaustauscherharzes oder einer Trennmembran zur Verringerung der ionischen Leitfähigkeit des Latex auf 2,5 mS/cm oder weniger, gemessen bei einer Polymerkonzentration von 25 Gew.% bei 25°C;
(ii) Beschichten des Trägers mit entweder
(a) einer Beschichtungslösung für eine thermografische Schicht, die ein nichtfotoempfindliches organisches Silbersalz, ein Reduktionsmittel für das organische Silbersalz und das behandelte Polymerlatex enthält; oder
(b) einer Beschichtungslösung für eine fotothermografische Schicht, die ein fotoempfindliches Silberhalogenid, ein nichtfotoempfindliches Silbersalz, ein Reduktionsmittel für das organische Silbersalz und das behandelte Polymerlatex enthält; und
(iii) Trocknen der Beschichtung unter Ausbildung der bilderzeugenden Schicht.

2. Verfahren gemäss Anspruch 1, worin die Beschichtungslösung eine wässrige Dispersion ist, die ein wässriges Lösungsmittel umfasst, das mindestens 30 Gew.% Wasser enthält.

3. Verfahren gemäss Anspruch 1 oder 2, worin das funktionelle Trennpolymer eine Trennmembran ist.

4. Verfahren gemäss Anspruch 3, worin das funktionelle Trennpolymer eine Ultrafiltrationsmembran oder eine Dialysemembran ist.

5. Verfahren gemäss mindestens einem der vorhergehenden Ansprüche, worin das Polymerlatex ein Polymer umfasst, das einen Gleichgewichtsfeuchtigkeitsgehalt bei 25°C und 60 % relativer Feuchtigkeit von bis zu 2 Gew.% aufweist.

## Revendications

1. Procédé de production d'un élément d'enregistrement comprenant un support et au moins une couche formant une image sur au moins une surface du support, comprenant les étapes consistant à :
(i) traiter un latex de polymère avec un polymère fonctionnel de séparation sous la forme d'une résine échangeuse d'ions ou d'une membrane de séparation, pour réduire la conductivité ionique du latex à 2,5 mS/cm ou moins, lorsqu'elle est mesurée à une concentration en polymère de 25 % en poids à 25°C ;
(ii) recouvrir le support, soit
(a) d'une solution de revêtement en couche thermographique contenant un sel organique d'argent non photosensible, un agent réducteur pour le sel organique d'argent et le latex de polymère traité; soit
(b) d'une solution de revêtement en couche photothermographique contenant un halogénure d'argent photosensible, un sel organique d'argent non photosensible, un agent réducteur pour le sel organique d'argent, et le latex de polymère traité ; et
(iii) sécher le revêtement pour former la couche formant une image.

2. Procédé suivant la revendication 1, dans lequel la solution de revêtement est une dispersion aqueuse comprenant un solvant aqueux contenant au moins 30% en poids d'eau.

3. Procédé suivant la revendication 1 ou la revendication 2, dans lequel ledit polymère fonctionnel de séparation est une membrane de séparation.

4. Procédé suivant la revendication 3, dans lequel ladite membrane de séparation est une membrane d'ultrafiltration ou une membrane de dialyse.

5. Procédé suivant l'une quelconque des revendications précédentes, dans lequel ledit latex de polymère comprend un polymère ayant une teneur en humidité à l'équilibre allant jusqu'à 2% en poids, à 25°C et à une RH de 60%.
